(19) Europäisches Patentamt / European Patent Office / Office européen des brevets

(11) **EP 4 396 593 B1**

(12) **EUROPEAN PATENT SPECIFICATION**

(45) Date of publication and mention of the grant of the patent:
**30.07.2025   Bulletin 2025/31**

(21) Application number: **22792927.0**

(22) Date of filing: **02.09.2022**

(51) International Patent Classification (IPC):
**G01R 31/12** *(2020.01)*     **G06F 30/23** *(2020.01)*

(52) Cooperative Patent Classification (CPC):
**G01R 31/1272; G06F 30/23; G06F 30/367;**
G01R 31/58; G06F 2113/16; G06F 2119/08

(86) International application number:
**PCT/IT2022/050240**

(87) International publication number:
**WO 2023/031980 (09.03.2023 Gazette 2023/10)**

(54) **METHOD FOR CALCULATING THE ELECTRIC FIELD INSIDE A DIELECTRIC MATERIAL LAYER OF A HIGH VOLTAGE ELECTRIC CABLE FOR DIRECT ELECTRIC CURRENT, AND SYSTEM THEREFOR**

VERFAHREN ZUR BERECHNUNG DES ELEKTRISCHEN FELDES IN EINER DIELEKTRISCHEN MATERIALSCHICHT EINES ELEKTRISCHEN HOCHSPANNUNGSKABELS FÜR GLEICHSTROM UND SYSTEM DAFÜR

PROCÉDÉ DE CALCUL DU CHAMP ÉLECTRIQUE À L'INTÉRIEUR D'UNE COUCHE DE MATÉRIAU DIÉLECTRIQUE D'UN CÂBLE ÉLECTRIQUE HAUTE TENSION POUR COURANT ÉLECTRIQUE CONTINU, ET SYSTÈME ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **03.09.2021   IT 202100022886**

(43) Date of publication of application:
**10.07.2024   Bulletin 2024/28**

(73) Proprietors:
- **Rizzo, Giuseppe**
  **90135 Palermo (PA) (IT)**
- **Romano, Pietro**
  **90141 Palermo (PA) (IT)**
- **Imburgia, Antonino**
  **90010 Altavilla Milicia (PA) (IT)**
- **Ala, Guido**
  **90146 Palermo (PA) (IT)**

(72) Inventors:
- **Rizzo, Giuseppe**
  **90135 Palermo (PA) (IT)**
- **Romano, Pietro**
  **90141 Palermo (PA) (IT)**
- **Imburgia, Antonino**
  **90010 Altavilla Milicia (PA) (IT)**
- **Ala, Guido**
  **90146 Palermo (PA) (IT)**

(74) Representative: **Ferriero, Paolo et al**
**Barzanò & Zanardo Roma S.p.a.**
**Via Piemonte 26**
**00187 Roma (IT)**

(56) References cited:
**CN-A- 110 427 637**

- **RIZZO GIUSEPPE ET AL: "Effect of Heat Exchange Transient Conditions With Moving Water-Air Interface on Space Charge Accumulation in Undersea HVdc Cables", IEEE TRANSACTIONS ON INDUSTRY APPLICATIONS, IEEE SERVICE CENTER, PISCATAWAY, NJ, US, vol. 57, no. 5, 26 July 2021 (2021-07-26), pages 4528 - 4536, XP011874567, ISSN: 0093-9994, [retrieved on 20210825], DOI: 10.1109/ TIA.2021.3099087**

EP 4 396 593 B1

- RIZZO G ET AL: "Polarity reversal in HVDC joints - the effect of the axial thermal conduction", 2020 IEEE CONFERENCE ON ELECTRICAL INSULATION AND DIELECTRIC PHENOMENA (CEIDP), IEEE, 18 October 2020 (2020-10-18), pages 115 - 118, XP033919823, DOI: 10.1109/CEIDP49254.2020.9437527
- CHEN JIMING ET AL: "Space charge dynamics in double-layered insulation cable under polarity reversal voltage", IEEE TRANSACTIONS ON DIELECTRICS AND ELECTRICAL INSULATION, IEEE SERVICE CENTER, PISCATAWAY, NJ, US, vol. 27, no. 2, 1 April 2020 (2020-04-01), pages 622 - 630, XP011780628, ISSN: 1070-9878, [retrieved on 20200325], DOI: 10.1109/TDEI.2019.008457
- TARANU LUCIAN VIOREL ET AL: "Influence of FGM layer on the distribution of the electric field in DC cable joints insulations", 2021 12TH INTERNATIONAL SYMPOSIUM ON ADVANCED TOPICS IN ELECTRICAL ENGINEERING (ATEE), IEEE, 25 March 2021 (2021-03-25), pages 1 - 7, XP033913637, DOI: 10.1109/ATEE52255.2021.9425303

**Description**

The present invention relates to the sector of the transmission of electrical energy in direct electric current and in particular it concerns a method for calculating the electric field within a dielectric material layer of a high voltage electric cable for direct electric current.

More specifically, said method is designed to automatically and substantially calculate in real time the electric field distribution over time within a dielectric material layer included in the electric cable itself.

The present invention also relates to a system for calculating said electric field by means of said method.

**Prior art**

An electric cable is an electrical component that includes from the inside to the outside in succession:

- a conductor made of metallic material,
- at least a first layer of semiconductive material, arranged around the conductor,
- a dielectric material layer, arranged around said first semiconductive material layer,
- at least a second semiconductive material layer, arranged around said dielectric material layer,
- at least one metallic material layer called screen.

Further layers may be present in the electrical cable depending on the type of application of the electrical cable.

In general, the main function of the dielectric material layer is to withstand the electrical stress to which it is subjected during the operation of the electrical cable, ensuring that the conductor and screen are electrically insulated from each other.

The thickness and type of dielectric material are selected and sized on the basis of the electrical stress and also the thermal and mechanical stress to be withstand, to prevent the properties of said dielectric material from being degraded.

Currently, a method is known to monitor in real time the maximum temperature inside the conductor and the maximum temperature on the external surface of a high voltage electric cable for direct electric current by measuring the electric current flowing in the conductor in the axial direction. (i.e. along the longitudinal axis of the electric cable) with the aim of preventing the temperature associated with the conductor from being greater than a predetermined temperature value or temperature threshold value.

Furthermore, this method allows the following values of electric current to be calculated in real time:

i) a first maximum value associated with an admissible permanent electric current which can flow continuously for an indefinite time in a conductor under the conditions of use without exceeding a temperature threshold under nominal conditions;

ii) at least a second value associated with an admissible permanent electric current which can flow continuously for a predetermined time in a conductor in the conditions of use without exceeding a further temperature threshold in emergency conditions.

This method is the same method used to monitor high voltage electrical cables for alternating current.

However, the use of a method designed to monitor high voltage electrical cables for alternating current in order to monitor high voltage electrical cables for direct current has some disadvantages.

A disadvantage is that a method designed to monitor high voltage electric cables for alternating current does not allow real time monitoring of the electric field inside the dielectric material layer of a high voltage electric cable for direct current.

Therefore, monitoring a high voltage electric cable for direct electric current using the same method with which a high voltage electric cable for alternating current is monitored does not allow to evaluate the risks deriving from the accumulation of spatial electric charge inside the dielectric material layer.

If on the one hand these phenomena are not relevant in a high voltage electric cable for alternating electric current, on the other hand, in a high voltage electric cable for direct electric current, said phenomena cause premature aging and a loss of dielectric properties of the dielectric material layer of the electric cable.

In fact, the electrical stress is conditioned not only by the voltage applied between the conductor and the screen, but also by accumulation phenomena of spatial electric charge that occur over time, when the electric cable is in use, in which said phenomena are related to the electric field variations over time.

Therefore, if the time-varying electric field is not monitored and consequently not known, it is not possible to evaluate the entity of said phenomena and the dielectric material layer of the electric cable can be subjected over time to the risks mentioned above (i.e. aging and loss of dielectric properties).

Relevant prior art is disclosed in CN 110 427 637 A which discloses a simulation method for the space charge distribution of DC cables taking into account the influence of temperature and electric field gradient.

**Aim of the invention**

The aim of the present invention is to overcome said disadvantage by providing a method for calculating automatically and substantially in real time the electric field within a dielectric material layer of a high voltage electric cable for direct electric current.
Advantageously, by means of said method, the possibilities that said dielectric material layer is subject to premature aging and/or a loss of its dielectric properties and/or runs the risk of failure are limited.
A further object of the present invention is to provide a system for carrying out this method.

**Object of the invention**

Object of the invention is a method for calculating the electric field within a dielectric material layer of a high voltage electric cable for direct electric current according to claim 1.
Further preferred embodiments are described in the method dependent claims.
A further object of the invention is a system for calculating the electric field within a dielectric material layer of a high voltage electric cable for direct electric current according to claim 15.
Further preferred embodiments are described in the system dependent claims.

**Figure list**

The present invention will be now described, for illustrative, but not limitative purposes, according to its embodiment, making particular reference to the enclosed figures, wherein:

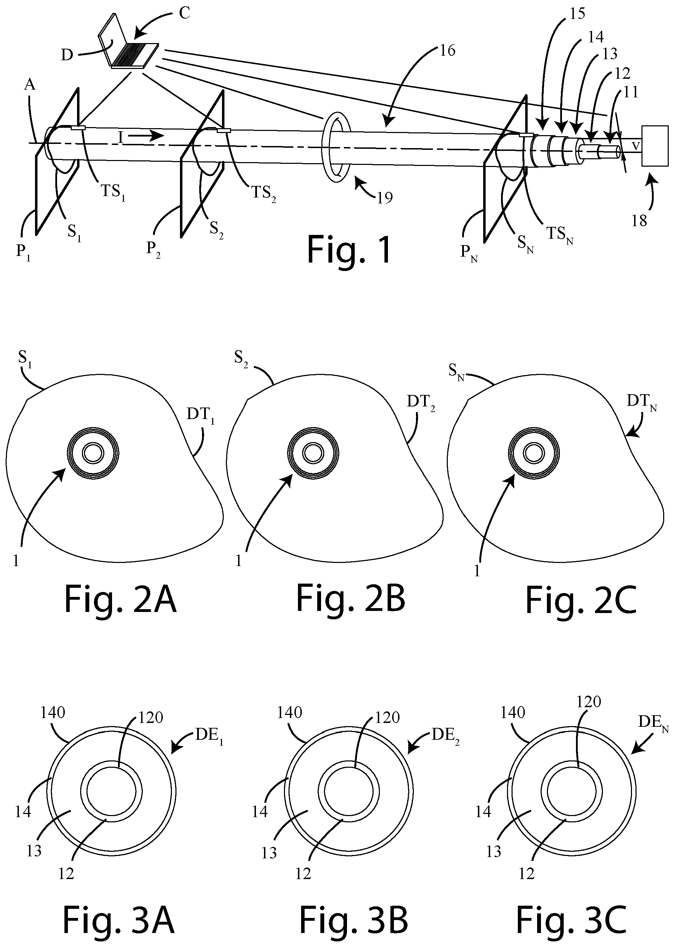

Figure 1 is a schematic view of an electric cable comprising from inside to outside a conductor, a first semiconductive material layer, a dielectric material layer, a second semiconductive material layer and a metallic material layer called shield and an outer layer which is a sheath, in which a plurality of planes transverse to the longitudinal axis of the electric cable, temperature measuring means, an electric current measuring device, a voltage measuring device between said conductor and said shield, and a computer, connected to said temperature measuring means, to said electric current measuring device and to said voltage measuring device, are visible;
Figures 2A, 2B, 2C show a respective computing domain associated with a respective area that includes a respective section of the electric cable, in which said area is arranged on a respective transverse plane to the longitudinal axis of the electric cable;
Figures 3A, 3B, 3C show a respective further computing domain associated with a respective further area, in which said further area is arranged inside said electric cable, between the first semiconductive material layer and the second semiconductive material layer of the electric cable (in Figures 3A, 3B 3C, the conductor, the shield and the outer layer of the electric cable are not shown);
Figure 4 is a schematic view of a grid of the computation domain of Figure 2A comprising a plurality of finite elements to be used for the computation of a temperature distribution by means of a finite element method;
Figure 5 shows an enlargement of a detail of Figure 4 to show some finite elements of said computing domain, arranged along a radial direction of the electric cable;
Figure 6 shows an enlargement of figure 5 of a detail of Figure 4 to show some finite elements belonging to the further calculation domain, arranged along a radial direction of the electric cable, to be used for the calculation of an electric field distribution by means of a further finite element method.

**Detailed description of the invention**

With particular reference to Figure 1, a method for calculating an electric field inside a dielectric material layer 13 of a high voltage electric cable 1 for direct electric current.
In particular, said electric cable 1 comprises a plurality of layers and more particularly from the inside towards the outside:

- a conductor 11 having a longitudinal axis A,
- a first semiconductive material layer 12,
- said dielectric material layer 13,
- a second semiconductive material layer 14,

- a metallic material layer 15 called shield,

Moreover, said electric cable 1 further comprises an outer layer 16 which is a sheath.

In general, additional layers may be present inside the electric cable 1 according to the type of application of the electric cable itself.

For example, the electric cable can comprise further first semiconductive material layers and/or further second semiconductive material layers and/or further external layers.

However, in the embodiment being described, said electric cable 1 is constituted by said conductor 11, by said first semiconductive material layer 12, by said dielectric material layer 13, by said second semiconductive material layer 14, by said metallic material layer 15 called screen and from said outer layer 16.

Said method comprises the following steps:

A) identifying one or more areas $S_j$, with j=1,2...N where N is a positive integer, each of which is arranged along said electric cable 1, on a respective plane $P_j$ transverse to the longitudinal axis A of said electric cable 1 and has a geometric shape defined by a closed reference line;

B) associating a respective computational domain $DT_J$ with each area $S_j$, as well as associating a respective further computational domain $DE_J$ with a further area which is a portion of said area $S_j$ and is arranged inside said electric cable 1, between said first semiconductive material layer 12 and said second semiconductive material layer 14, wherein said computational domain $DT_J$ is discretized through a set of finite elements $e_{J1}, e_{J2}...e_{JM}$, wherein J indicates the area and M is a positive integer and said further computational domain $DE_J$ is discretized through a further set of finite elements $e_{JX}, e_{JY}...e_{JL}$, wherein J indicates the area and X, Y and L are positive integers used to indicate any finite element, and wherein said further area is included between a first closed line 120 and a second closed line 140 and in transversal section said first closed line 120 is a first contact line between the conductor 11 and said first semiconductive material layer 12 and said second closed line 140 is a second contact line between said second semiconductive material layer 14 and said shield 15;

C) acquiring:

- a value of temperature $TE_J$ at each area $S_j$ through temperature measuring means $TS_J$;
- a value of voltage $V$ between said conductor 11 and said shield 15, wherein said value of voltage $V$ is obtained through a voltage measuring device 18 or is a predetermined value of voltage;
- a value of electric current $I$ flowing along the longitudinal axis A of the conductor 11, wherein said value of electric current $I$ is obtained through an electric current measuring device 19 or is a predetermined value of electric current;

D) calculating, by means of a numerical finite element method, a respective temperature distribution $Te_{J1}, Te_{J2}...Te_{JM}$ for each computational domain $DT_J$, wherein each value of temperature of a temperature distribution is associated with a respective finite element $e_{J1}, e_{J2}...e_{JM}$ of a respective computational domain $DT_J$, each temperature distribution being calculated by solving:

o Fourier's law for conducting heat in transient conditions, starting from said temperature values $TE_J$, from said measured electric current values $I$, and from a predetermined temperature distribution $T_0$;

E) calculating, by means of a further numerical finite element method, a respective electric field distribution $Ee_{JX}, Ee_{JY}...E_{JL}$ for each further computational domain $DE_J$, wherein each value of electric field of an electric field distribution is associated with a respective finite element $e_{JX}, e_{JY}...e_{JL}$ of said further computational domain $DE_J$, each electric field distribution being calculated by solving:

o Gauss's law for an electric field E in transient conditions, applied to each finite element $e_{JY}$ falling into the dielectric material layer 13,

o the law of continuity of electric current in stationary conditions applied to each finite element $e_{JL}$ which falls in the first semiconductive material layer 12 or in the second semiconductive material layer 14 and which does not contact one or more finite elements $e_{JL}$ which fall into the dielectric material layer 13,

∘ Schottky's law referred to an injection of electric charges in correspondence of a contact line between different materials, applied to each finite element $e_{JX}$ which falls into the first semiconductive material layer 12 or in the second semiconductive material layer 14 and contacts one or more finite elements $e_{JY}$ which fall into the dielectric material layer 13 (the expression "contact line" or "interface" means the portion of a contact surface between different materials on the section of the electric cable 1 inside the respective area $S_j$),

o the relationship between electric field $E$ and said voltage $V$, starting from boundary conditions applied to said first closed line 120 and to said second closed line 140 of the respective further computational domain $D_{EJ}$, in which said boundary conditions depend on said voltage value V and on a predetermined electric charge density distribution $\rho_0$.

With particular reference to step A, one or more areas $S_j$ are identified along said electric cable 1.

Each area $S_j$ is arranged on a respective plane $P_j$ which is transverse to the longitudinal axis A of the electric cable 1 and has a geometric shape delimited by a closed reference line.

In the embodiment being disclosed, as shown in Figure 1, a plurality of areas $S_j$ are identified along said electric cable 1 and each area $S_j$ is external to electric cable 1 and arranged around the electric cable itself, on a respective plane $P_j$.

In particular, Figure 1 shows a plurality of areas $S_1, S_2, ... S_N$, each of which is arranged on a respective plane $P_1, P_2, ... P_N$.

However, each area $S_j$ can be within said electric cable 1, without departing from the scope of the invention.

The step A can be performed by a processing unit (which can comprise or be constituted of a microcontroller), not shown.

In the embodiment being disclosed, said processing unit is arranged inside a computer C.

With particular reference to step B, reference is made to two computational domains:

- a respective computational domain $DT_J$ associated with to each area $S_j$, and
- a respective further computational domain $DE_J$ associated to a further area which is a portion of said area $S_j$ and is arranged inside said electric cable 1, between said first semiconductive material layer 12 and said second semiconductive material layer 14.

Figures 2A, 2B and 2C show a respective computational domain $DT_1, DT_2, ... DT_N$ associated with a respective area $S_1, S_2, ... S_N$.

Figures 3A, 3B and 3C show a respective further computational domain $DE_1, DE_2, ... DE_N$ associated with a respective further area which is a portion of a respective area $S_1, S_2, ... S_N$.

Each further computational domain $DE_1, DE_2, ... DE_N$ is included in a respective computational domain $DT_1, DT_2, ... DT_N$.

As said, said further area is included between a first closed line 120, which is a first contact line 120 between the conductor 11 and said first semiconductive material layer 12, and a second closed line 140 which is a second contact line between said second semiconductive material layer 14 and said shield 15.

Figures 3A, 3B and 3C show for each further computational domain $DE_1, DE_2, ... DE_N$ the respective first closed line 120 and the second closed line 140.

In particular, each computational domain $DT_J$ is discretized through a respective set of finite elements $e_{J1}, e_{J2} ... e_{JM}$ and each set of finite elements forms a respective grid $GT_J$.

Furthermore, the finite elements $e_{J1}, e_{J2} ... e_{JM}$ are arranged in such a way as to divide the computational domain $DT_J$ in a plurality of slices, each of which is arranged along a predetermined radial direction of the section of the electric cable 1 in said respective area $S_j$.

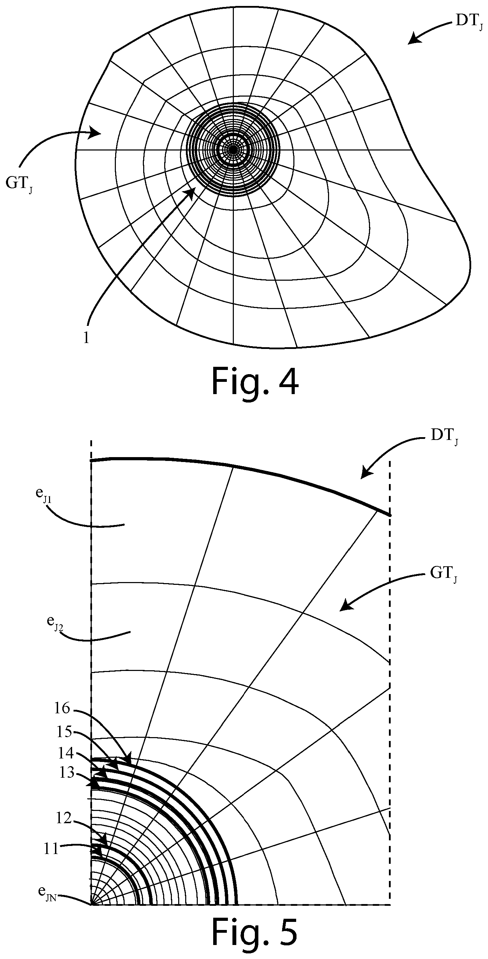

Figure 4 shows a grid $GT_J$ for a general computational domain $DT_J$ associated with a general area $S_J$.

Figure 5 shows an enlargement of a detail of said grid $GT_J$.

Furthermore, each further computational domain $DE_J$ is discretized through a respective further set of finite elements and each further set of finite elements forms a respective further grid $GE_J$.

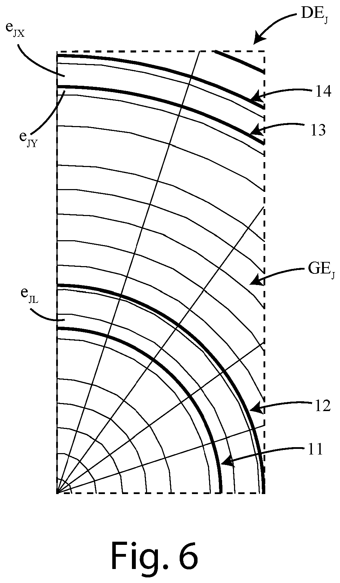

Figure 6 shows an enlargement of a detail of said further grid $GE_J$.

In the embodiment being disclosed, each further set of finite elements is a sub-set of finite elements $e_{JX}, e_{JY} ... e_{JL}$ of a respective set of finite elements $e_{J1}, e_{J2} ... e_{JM}$.

Therefore, the further grid $GE_J$ is a portion of the grid $GT_J$.

Step B can be performed by said processing unit.

With particular reference to step C, in the embodiment being disclosed, a respective value of temperature $TE_J$ at each area $S_j$ is measured through said temperature measuring means $TS_J$, a value of voltage V between said conductor 11 and said shield 15 is measured through said voltage measuring device 18, and a value of electrical current I flowing along the longitudinal axis A of the conductor 11 is measured through said electric current measuring device 19.

Said temperature measuring means $TS_J$ comprise a plurality of temperature sensors for measuring a temperature at a respective area $S_j$.

In the embodiment being disclosed, said temperature sensors are indicated with the reference $TS_1, TS_2, ... TS_N$ and are arranged on a respective portion of said outer layer 16 of said electric cable 1.

However, said temperature sensors can be arranged inside said electrical cable 1 or at a predetermined distance from said outer layer 16, without departing from the scope of the invention.

In an alternative, not shown in Figures, said temperature measuring means can be comprise a distributed temperature sensor with a longitudinal resolution to measure a temperature at each area $S_j$.

Said distributed temperature sensor can be arranged inside said electric cable 1 or on said outer layer 16 of said electric cable 1 or at a predetermined distance from said outer layer 16.

With reference to the voltage measuring device 18, in the embodiment being disclosed, said voltage measuring means is a voltmeter.

With reference to the electric current measuring device 19, in the embodiment being disclosed, said electric current measuring device 19 is an ammeter

In an alternative, the value of voltage can be a predetermined voltage value (i.e. a constant value) which is not measured by any voltage measuring device, but is acquired by a processing unit, described below, configured to acquire said predetermined value that can be established by a user.

Also the value of electric current value can be a predetermined electric current value which is not measured by any electric current measuring device, but is acquired by said processing unit configured to acquire said predetermined electric current value which can be established by a user.

However, the measurement of the voltage value and the electric current value is advantageous to correctly calculate the electric field when there are variations in voltage or variations in electric current.

With reference to step D, a respective temperature distribution $Te_{J1},Te_{J2}...Te_{JM}$ for each computational domain $DT_J$ is calculated by means of a numerical finite element method.

In particular, the distribution temperature $Te_{J1},Te_{J2}...Te_{JM}$ was calculated assuming that the temperature values vary along a radial direction of the electric cable 1 and along a tangential direction.

In this way, it is possible to take into account the environment in which said electric cable 1 is installed, for example underground, in which the heat exchange between the electric cable 1 and the surrounding environment is different for different portions of each section of the electric cable 1 within a respective area $S_j$.

The calculation of each temperature distribution is performed by said processing unit.

Said processing unit is connected to each of said temperature $TS_1,TS_2,...TS_N$ and configured to acquire a respective temperature value $TE_1,TE_2,...TE_N$ measured by each said temperature sensors.

Furthermore, said processing unit is connected to said electric current measuring device 19 and configured for acquiring an electric current value $I$ from said electric current measuring device 19.

Each temperature value of a respective temperature distribution $Te_{J1},Te_{J2}...Te_{JM}$ is associated with a respective finite element $e_{J1},e_{J2}...e_{JM}$ of a respective computational domain $DT_J$.

Each temperature distribution is calculated by solving the Fourier's law for conducting heat in transient conditions, starting from said temperature values $TE_J$ (measured through said temperature measuring means $TS_J$), said measured electric current value $I$, a predetermined temperature distribution $T_0$.

Said predetermined temperature distribution $T_0$ can be stored by the processing unit in storage means (such as a memory), not shown, and said processing unit can be connected to said storage means.

In the embodiment being disclosed, said processing unit comprises said storage means.

In particular, the Fourier's law is expressed in discrete form and is solved with a spatial discretization which is represented by the finite elements of the computational domain $DT_J$, mentioned above, and a temporal discretization.

This temporal discretization has a predetermined time step $\Delta t$.

This predetermined time step $\Delta t$ can be of the order of seconds.

In the embodiment being disclosed, said predetermined time step $\Delta t$ is constant and equal to 10s.

Furthermore, in an initial time instant $t_0$, when a quantity of direct electric current begins to flow along the longitudinal axis A of the conductor 11, it is assumed that the predetermined temperature distribution $T_0$ is constant and equal to the ambient temperature.

With particular reference to step E, a respective electric field distribution $Ee_{JX},Ee_{JY}...E_{JL}$ for each further computational domain $DE_J$ is calculated by means a further numerical finite element method.

Each electric field value of an electric field distribution is associated with a respective finite element $e_{JX},e_{JY}...e_{JL}$ of said further computational domain $DE_J$.

Each electric field distribution is calculated by solving:

o Gauss's law for an electric field E in transient conditions, applied to each finite element $e_{JY}$ falling into the dielectric material layer 13,
o the law of continuity of electric current in stationary conditions applied to each finite element $e_{JL}$ which falls in the first semiconductive material layer 12 or in the second semiconductive material layer 14 and which does not contact one or more finite elements $e_{JL}$ which fall into the dielectric material layer 13,
o Schottky's law referred to an injection of electric charges in correspondence of a contact line between different materials, applied to each finite element $e_{JX}$ which falls into the first semiconductive material layer 12 or in the second semiconductive material layer 14 and contacts one or more finite elements $e_{JY}$ which fall into the dielectric material layer 13,

o the relationship between electric field E and said voltage V.

The boundary conditions are applied to said first closed line 120 and to said second closed line 140 of the respective further computational domain $D_{EJ}$ and depend on said voltage value V measured between said conductor 11 and said shield 15 and on a predetermined electric charge density distribution $\rho_0$.

In particular, in said initial time instant $t_0$, when a quantity of direct electric current begins to flow along the longitudinal axis A of the conductor 11, it is assumed that the predetermined electric charge density distribution $\rho_0$ is constant and equal to zero.

Gauss's law for an electric field E in transient conditions is expressed in discrete form and is solved with a spatial discretization that is represented by the finite elements of the further computation domain $DE_J$, mentioned above, and a temporal discretization.

Said predetermined time step $\Delta t$ was also used for this time discretization.

In particular, this temporal discretization can be the same as that used to solve said Fourier's law in transitory conditions.

The law of continuity of electric current in stationary conditions is expressed in discrete form and is solved with a spatial discretization that is represented by the finite elements of the further computation domain $DE_J$, mentioned above.

Schottky's law referred to an injection of electric charges depends on the temperature value, the electric field value, the materials and factors relating to the contact lines or interfaces between materials.

Since the temperature and the electric field associated with the elements belonging to the first semiconductive material layer 12 or to the second semiconductive material layer 14 vary over time and are calculated in real time using the aforementioned method, the injection of electrical charges also varies over time.

Schottky's law can be expressed by the following formula:

$$J_{Schottky} = A_{el}T^2 \cdot exp\left(\frac{-q \cdot \varphi_{el}}{k_b \cdot T}\right) \cdot exp\left(\frac{-q}{k_b \cdot T}\sqrt{\frac{-q \cdot E_m}{4\pi\varepsilon}}\right) + A_{lac}T^2$$

$$\cdot exp\left(\frac{-q \cdot \varphi_{lac}}{k_b \cdot T}\right) \cdot exp\left(\frac{-q}{k_b \cdot T}\sqrt{\frac{-q \cdot E_m}{4\pi\varepsilon}}\right)$$

where:

$A_{el}$ e $A_{lac}$ are respective constants, each of which depends on the materials and the injected electrical charges, in particular:

$A_{el}$ is a first constant dependent on the materials and on the fact that the injected electric charges are electrons, i.e. negative electrical charges;

$A_{lac}$ è una costante dipendente dai materiali e dal fatto che le cariche elettriche iniettate sono lacune, i.e. cariche elettriche positive;

is a constant dependent on the materials and on the fact that the injected electrical charges are electron holes, i.e. positive electric charges;

T is the temperature of the element in which Schottky's law is applied;

q is the elementary electric charge (which is a known constant);

$\varphi_{el}$ is the potential barrier for the injection of electrons;

$\varphi_{lac}$ is the potential barrier for the injection of electron holes;

$k_b$ is Boltzman's constant (which is a known constant);

$\varepsilon$ is the permittivity of the material of the element in which Schottky's law is applied;

$E_m$ èis the electric field of the element where Schottky's law is applied.

The parameters $\varphi_{el}$ and $\varphi_{lac}$ are parameters that depend on the injected electrical charges (i.e. if the injected electrical charges are electrons or electron holes), on the materials and on one or more factors concerning one or more contact lines or interfaces between different materials, such as material roughness, protrusions of materials, presence of impurities, presence of gaps between materials due to a non-perfect adhesion between the materials (for example due to a detachment of the materials), etc..

The transient conditions for Gauss's law for an electric field E and the stationary conditions for the law of continuity of electric current allow to calculate the electric field distribution $Ee_{JX}, Ee_{JY}...E_{JL}$ with significantly reduced calculation times, substantially in real time, compared to known finite element methods used for the calculation of the electric field.

Furthermore, the electric field distribution $Ee_{JX}, Ee_{JY}...E_{JL}$ can be calculated assuming that the electric field values vary along a radial direction of the electric cable 1 and along a tangential direction.

Alternatively, the electric field distribution $Ee_{JX}, Ee_{JY}...E_{JL}$ can be calculated can be calculated only along a radial direction, assuming that the electric field values vary only along the radial direction of the electric cable 1 and not along the tangential direction, as explained below.

The calculation of each electric field distribution $Ee_{JX}, Ee_{JY}...E_{JL}$ is performed by said processing unit.

Said processing unit is connected to said voltage measuring device 18 and configured to acquire a voltage value V from said voltage measuring device 18.

Said predetermined electric charge density distribution $\rho_0$ can be stored by said processing unit in said storage means.

The method may further comprise the following steps which are performed for each area $S_j$ periodically at predetermined time intervals $\Delta t$ (in which each predetermined time interval coincides with the predetermined time step mentioned above):

F) calculating an electrical conductivity distribution $\sigma e_{JX}, \sigma e_{JY}...\sigma e_{JL}$ for each finite element $e_{JX}, e_{JY}...e_{JL}$ of each further computational domain $DE_J$, starting from said calculated temperature distribution $Te_{J1}, Te_{J2}...Te_{JM}$ and from said calculated electric field distribution $Ee_{JX}, Ee_{JY}...E_{JL}$;

G) calculating an electric current density distribution $Je_{JX}, Je_{JY}...J_{JL}$ for each finite element $e_{JX}, e_{JY}...e_{JL}$ of each further computational domain $DE_J$ through the Ohm's law;

H) calculating a respective value of electric charge density $\rho e_{JX}, \rho e_{JY}...\rho e_{JL}$ for each finite element $e_{JX}, e_{JY}...e_{JL}$ of each further computational domain $DE_J$ by solving:

o the law of continuity of electric current in transient conditions, wherein said law of continuity of electric is applied to each finite element $e_{JY}$ of each further computational domain $D_{EJ}$ which falls within the dielectric material layer 13, and

o Gauss's law for an electric field *E* in stationary conditions, wherein said Gauss's law is applied to each finite element $e_{JX}$, $e_{JL}$ of each further computational domain $DE_J$ which falls in the first semiconductive material layer 12 or in the second semiconductive material layer 14;

I) updating said predetermined temperature distribution $T_0$ with the temperature values of said calculated temperature distribution $Te_{J1}, Te_{J2}...Te_{JM}$ and updating said predetermined electric charge density distribution $\rho_0$ with the calculated electric charge density values $\rho e_{JX}, \rho e_{JY}...\rho e_{JL}$;

J) repeating the steps from C to E.

With reference to the time interval $\Delta t$, said time interval is greater than of the computational time for solving calculations menzioned in steps from C to I.

Preferably, said time interval $\Delta t$ is three orders of magnitude greater than said computational time.

Furthermore, once the computational time is known to calculate the temperature distribution $Te_{J1}, Te_{J2}...Te_{JM}$, the electric field distribution $Ee_{JX}, Ee_{JY}...E_{JL}$, the electrical conductivity distribution $\sigma e_{JX}, \sigma e_{JY}...\sigma e_{JL}$, the electrical current density distribution $Je_{JX}, Je_{JY}...Je_{JL}$, and the electric charge density $\rho e_{JX}, \rho e_{JY}...\rho e_{JL}$, at a given time instant, steps F to J can be performed after a further time interval $\Delta t'$ equal to the difference between said time interval $\Delta t$ and said computational time, so as to obtain a result in real time every time interval $\Delta t$.

With particular reference to step F, an electrical conductivity distribution $\sigma e_{JX}, \sigma e_{JY}...\sigma e_{JL}$ was calculated by the processing unit of computer C for each further computational domain $DE_J$, starting from the calculated temperature distribution $Te_{J1}, Te_{J2}...Te_{JM}$ and the calculated electric field distribution $Ee_{JX}, Ee_{JY}...Ee_{JL}$.

With particular reference to step G, an electrical current density distribution $Je_{JX}, Je_{JY}...Je_{JL}$ was calculated by the processing unit of computer C for each further computational domain $DE_J$ using Ohm's law.

In particular, the electrical conductivity distribution $\sigma e_{JX}, \sigma e_{JY}...\sigma e_{JL}$, the electrical current density distribution $Je_{JX}, Je_{JY}...Je_{JL}$, and the electric charge density $\rho e_{JX}, \rho e_{JY}...\rho e_{JL}$ can be calculated assuming that the values vary along a radial direction of the electric cable 1 and along a tangential direction.

Alternatively, when said electric field distribution $Ee_{JX}, Ee_{JY}...E_{JL}$ is calculated only along said radial direction, also the electric conductivity distribution $\sigma e_{JX}, \sigma e_{JY}...\sigma e_{JL}$, the electric current density distribution $Je_{JX}, Je_{JY}...Je_{JL}$, and the electric charge density $\rho e_{JX}, \rho e_{JY}...\rho e_{JL}$ can only be calculated along said radial direction, assuming that they do not vary along the tangential directions. In this way, the computation time is further reduced.

With particular reference to step H, by means of the processing unit of computer C, a respective electric charge density value $\rho e_{JX}, \rho e_{JY}...\rho e_{JL}$ has been calculated for each finite element $e_{JX}, e_{JY}...e_{JL}$ of each further computational domain $DE_J$, solving the law of continuity of electric current in transient conditions and Gauss's law for an electric field $E$ in stationary conditions.

The transient conditions for the law of continuity of electric current and the stationary conditions for Gauss's law for an electric field $E$ allow to calculate the electric charge density $\rho e_{JX}, \rho e_{JY}...\rho e_{JL}$ with significantly reduced computation times, substantially in real time, compared to known finite element methods used for the calculation of the electric charge density.

The law of continuity of electric current in transient conditions and Gauss's law for an electric field $E$ in stationary conditions are expressed in discrete form.

With particular reference to step I, the predetermined temperature distribution $T_0$ is updated with the temperature values of said calculated temperature distribution $Te_{J1}, Te_{J2}...Te_{JM}$ and the predetermined electric charge density distribution $\rho_0$ is updated with the calculated electric charge density $\rho e_{JX}, \rho e_{JY}...\rho e_{JL}$.

The updated values of the predetermined temperature distribution $T_0$ and the updated values of the predetermined electric charge density distribution $\rho_0$ can be stored in said storage means.

In light of the above, for each time instant $t_k$ with k = 1.2 ... Z where Z is a positive integer, excluding the initial time instant $t_0$ mentioned above, the values of the predetermined temperature distribution $T_0$ and the values of the predetermined electric charge density distribution $\rho_0$ are equal respectively to the temperature values $Te_{J1}, Te_{J2}...Te_{JM}$ and to the electric charge density values $\rho e_{JX}, \rho e_{JY}...\rho e_{JL}$ calculated in the previous time instant of time $t_{k-1}$ $(t_k - t_{k-1} = \Delta t)$.

With particular to step J, the steps C, D and E are repeated at periodic time intervals $\Delta t$.

The method steps described above can be used in addition to other steps to monitor the electrical stress to which the electrical cable 1 is subjected with respect to an electrical stress for which the electrical cable was designed or a predetermined electrical stress.

To this end, said method can further comprise the following steps in addition to the steps A to E or steps A to J:

K) identifying a respective maximum value of electric field $E_{MAXJ}$ in each further computational domain $DE_J$;
L) comparing each maximum value of electric field $E_{MAXJ}$ with a predetermined value of electric field $E_{REF}$;
M) if said maximum value of electric field $E_{MAXJ}$ is greater than said predetermined value of electric field $E_{REF}$, establishing that at least one section of electrical cable 1 at each said area $S_j$ is subjected to an electrical stress greater than an electrical stress for which said electrical cable 1 was designed or to a predetermined electrical stress.

In other words, after having identified for each further computational domain $DE_J$ a respective maximum value of electric field $E_{MAXJ}$, each value of electric field $E_{MAXJ}$ is compared with a predetermined value of electric field $E_{REF}$ which is a threshold value and if one or more maximum values of electric field $E_{MAXJ}$ are greater than said predetermined value of electric field $E_{REF}$, it means that the section of the electric cable 1 at the respective area $S_j$ is subjected to an electric stress higher than an electric stress for which said electric cable 1 has been designed or to a predetermined electrical stress.

With reference to the finite element method, said finite element method mentioned in step D can solve a respective system of linear equations for each computational domain $DT_J$:

$$A1_j * T_j = B1_j$$

dove

$A1_j$ is a first square matrix with a number of rows and a number of columns equal to the number of finite elements $e_{J1}, e_{J2}...e_{JM}$ of said computational domain $DT_J$, and each element of said matrix is a constant numeric coefficient depending on the geometric properties of said computational domain $DT_J$ and from the thermophysical properties of at least one material associated with a finite element corresponding to a portion of said electric cable 1,

$T_j$ is a first column vector with a number of elements equal to the number of finite elements $e_{J1}, e_{J2}...e_{JM}$ of said computational domain $DT_J$ and each element of said first column vector is a value of temperature which is unknown,

$B1_j$ is a further first column vector with a number of elements equal to the number of finite elements $e_{J1}, e_{J2}...e_{JM}$ of said computational domain $DT_J$ and each element is a numeric value variable over time and depending on the boundary conditions of heat exchange between electric cable 1 and external environment, on the temperature of said predetermined temperature distribution $T_0$ associated with each finite element $e_{J1}, e_{J2}...e_{JM}$ of said computational domain $DT_J$, on a thermal power value calculated on the basis of the measured electric current values $I$ flowing in the conductor 11 and the thermophysical properties of at least one material associated with a finite element corresponding to said portion of said electric cable 1.

Furthermore, step D can comprise the following sub-steps:

D1) calculating a respective numeric value associated with each element of each first vector $B1_j$ on the basis of a value of temperature $Te_{J1}, Te_{J2}...Te_{JM}$ associated with each finite element $e_{J1}, e_{J2}...e_{JM}$ of said computational domain $DT_J$ and with the values of thermal power due to the passage of electric current $I$ in the conductor 11 and losses in the dielectric material layer 13;

D2) multiplying said first vector $B1_j$ by a further first matrix $A1_j'$, which is the inverse matrix of said first matrix $A1$, to obtain a respective value of temperature $Te_{J1}, Te_{J2}...Te_{JM}$ associated with each finite element $e_{J1}, e_{J2}...e_{JM}$ of said computational domain $DT_J$;

D3) for each computational domain $DT_J$ calculating a difference between a respective value of temperature $TE_J$ measured at each area $S_j$ and a respective value of temperature between the calculated values of temperature $Te_{J1}, Te_{J2}...Te_{JM}$, wherein said value of temperature is associated with a respective finite element between the finite elements $e_{J1}, e_{J2}...e_{JM}$ of said computational domain $DT_J$ at which said temperature value has been measured, to obtain a respective temperature variation value $\Delta T_J$;

D4) for each finite element $e_{J1}, e_{J2}...e_{JM}$ of said computational domain $DT_J$ calculating a respective updated value of temperature $Te_{J1}, Te_{J2}...Te_{JM}$ by adding a respective value of temperature obtained at sub-step D2 and a respective value of temperature variation $\Delta T_J$ obtained at sub-step D3.

Furthermore, in addition to or alternatively to the sub-steps from D1 to D4, said step D can comprise the following sub-steps:

D5) calculating a temperature gradient of said temperature distribution $Te_{J1}, Te_{J2}...Te_{JM}$ inside a respective section of said electric cable 1 in each area $S_j$ along a plurality of radial directions, wherein each value of temperature gradient is associated with a respective finite element $e_{J1}, e_{J2}...e_{JM}$ of a respective computational domain $DT_J$, wherein said finite element is arranged inside said electric cable 1; and

D6) identifying a radial direction of said plurality of radial directions associated with a maximum value of said calculated temperature gradient.

The partition of the computational domain $DT_J$ into segments along said predetermined radial directions advantageously allows to calculate said temperature gradient along all the radial directions associated with each segment in a simple manner, without the need for any interpolations.

The radial direction associated with a calculated maximum temperature gradient value can be advantageously used to speed up the calculation of the electric field $Ee_{JX}, Ee_{JY}...E_{JL}$ in step E, as already mentioned.

In fact, the electric field distribution $Ee_{JX}, Ee_{JY}...E_{JL}$ can only be calculated along said radial direction identified in sub-step D6.

In this way, it is possible to reduce the calculation times, since the electric field $Ee_{JX}, Ee_{JY}...E_{JL}$ is calculated only along the radial direction subject to the maximum temperature gradient used as an index to identify the worst situation.

Furthermore, also the electrical conductivity distribution $\sigma e_{JX}, \sigma e_{JY}...\sigma e_{JL}$, the electrical current density distribution $Je_{JX}, Je_{JY}...Je_{JL}$, and the electric charge density $\rho e_{JX}, \rho e_{JY}...\rho e_{JL}$ can only be calculated along said radial direction identified in sub-step D6.

This further reduces the computation time for calculating the electric field.

With reference to the further numerical finite element method mentioned in step E, said further numerical finite element method at step E can solve a respective linear equation system for each further computational domain $DE_J$

$$A2_j{}^*E_j=B2_j$$

where

$A2_j$ is a second square matrix with a number of rows and a number of columns equal to a number of finite elements of said further computational domain $DE_J$ and each element of said matrix is a constant numeric coefficient depending on the geometric properties of said further computational domain $DE_J$ and on the dielectric properties of at least one of a material associated with said portion of said electric cable 1 which falls inside said further computational domain $DE_J$,

$E_j$ is a second column vector with a number of elements equal to the number of finite elements $e_{JX}, e_{JY}...e_{JL}$ of said further computational domain $DE_J$ and each element is a numeric value of electric field $Ee_{JX}, Ee_{JY}...E_{JL}$ associated with each finite element $e_{JX}, e_{JY}...e_{JL}$ of said further computational domain $DE_J$,

$B2_j$ is a further second column vector with a number of elements equal to the number of finite elements $e_{JX}, e_{JY}...e_{JL}$ of said further computational domain $DE_J$, wherein each element is a numeric value depending on the boundary conditions of electric field $E$, on said value of voltage $V$ and on said predetermined electric charge density distribution $\rho_0$ associated with each finite element $e_{JX}, e_{JY} \ldots e_{JL}$ of said further computational domain $DE_J$.

Furthermore, the step E can comprise the following sub-steps:

E1) calculating a respective numerical value associated with each element of each second vector $B2_j$ on the basis of an electric charge density value $\rho_0$ associated with each finite element $e_{JX}, e_{JY} \ldots e_{JL}$ of said further computational domain $DE_J$ and said measured voltage value $V$;
E2) multiply said second vector $B2_j$ by a further second matrix $A2_j$' which is the inverse matrix of said second matrix $A2_j$ to obtain a respective electric field value $Ee_{JX}, Ee_{JY} \ldots E_{JL}$ associated with each finite element $e_{JX}, e_{JY} \ldots e_{JL}$ of said further computational domain $DE_J$.

Said method further comprises the following steps for taking into account a thermal conduction along the longitudinal axis A of the conductor 11:

N1) calculating for each area $S_j$ the mean value of temperature $\overline{T_{cj}}$ in the conductor 11;
N2) calculating:

a first axial temperature gradient $GR1_J$ as a difference between the mean value of temperature $\overline{T_{cj}}$ in the conductor 11 at an area $S_j$ and the mean value of temperature $\overline{T_{cj-1}}$ in the conductor 11 at a previous area $S_{j-1}$ by dividing for a value equal to a first distance $d_1$ between said area $S_j$ and said previous area $S_{j-1}$, and
a second axial temperature gradient $GR2_J$ as a difference between the mean value of temperature $\overline{T_{cj+1}}$ in the conductor 11 at an area $S_{j+1}$ and the mean value of temperature $\overline{T_{cj}}$ in the conductor 11 at a previous area $S_j$ by dividing for a value equal to a second distance $d_2$ between said area $S_{j+1}$ and said previous area $S_j$;

N3) multiplying the result due to the difference between said first axial temperature gradient $GR1_J$ and said second axial temperature gradient $GR2_J$ for a mean value of thermal conductivity of the conductor 11 for obtaining a respective thermal power flow value $Q_j$ for each area $S_j$;
N4) for each area $S_j$ calculating, according to a method to discretize differential equations, each element of said further first vector $B1_j$ taking into account said thermal power flow value $Q_j$.

In the embodiment being disclosed, said first distance $d_1$ is equal to said second distance $d_2$.
Furthermore, the method can further comprise further steps in addition to steps A to M for obtaining a value of waiting time $t_{RP}$ which is the time to wait before the polarity of said voltage $V$ between said conductor 11 and said shield 15 is inverted after that the value of said voltage $V$ has been set equal to zero, without said maximum value of electric field $E_{MAXJ}$ is greater than said predetermined value of electric field $E_{REF}$:
When a high voltage electric cable for direct electric current is connected to a converter, such as a current source converter, the polarity inversion of said voltage $V$ allows to reverse the direction of the electric current $I$ flowing along the longitudinal axis of the conductor 11.
To this end, said method can comprise the following steps:

O1) associating a value equal to zero with said waiting time $t_{RP}$;
O2) repeating the steps from C to M or from C to N4 for a predetermined number iterations NI considering a predetermined further time interval $\Delta t_{RP}$, wherein said value of voltage $V$ and said value of electric current $I$ have been set equal to zero;
O3) for each iteration, adding the value of said predetermined further time interval $\Delta t_{RP}$ to a respective value of waiting time $t_{RP}$ to obtain a respective updated value of waiting time $t_{RP}$;
04) repeating the steps from C to M or from C to N4 for a predetermined further number of iterations MI considering said predetermined further time interval $\Delta t_{RP}$, wherein said value of voltage $V$ is in absolute value equal to a nominal voltage value and has a sign opposite to the sign of said value of voltage $V$ before the polarity of said voltage $V$ is inverted, and said value of electric current $I$ is equal to zero;
O5) identifying for each area $S_j$ the maximum value of electric field $E_{MAXJ}$ and identify for each iteration of said predetermined further number of iterations MI a respective maximum value of electric field $E_{MAXRP}$ between said maximum values of electric field, wherein said maximum value of electric field $E_{MAXRP}$ is the maximum value of electric field reached after an inversion of polarity of the voltage $V$ between said conductor 11 and said shield 15 with a waiting time equal to the waiting time $t_{RP}$;
06) repeating the steps from O1 to O5 by progressively increasing said predetermined number of iterations NI until the maximum value of electric field $E_{MAXRP}$ is less than or equal to said predetermined value of electric field $E_{REF}$ and storing the value of waiting time $t_{RP}$ corresponding to said maximum value of electric field $E_{MAXRP}$.

In general, in use, the conductor 11 is connected to a converter and the shield 15 is connected to ground.

In particular, when the conductor 11 is connected to a current source converter, to prevent the dielectric material layer from being subjected to an electrical stress greater than a predetermined electrical stress (which can be a desired or required stress) or stress for which the electric cable 1 has been designed, an operator can invert the polarity of said voltage V through said converter after having waited a time greater than or equal to $t_{RP}$ after the value of said voltage $V$ has been set equal to zero.

Consequently, the method comprise the step of connecting said conductor 11 to a converter and said shield 15 to ground.

The present invention relates also to system for calculating a electric field inside a dielectric material layer 13 of a high voltage electric cable 1 for direct electric current, disclosed above.

Said system comprises:

- temperature measuring means $TS_J$;
- a processing unit connected to said temperature measuring means $TS_J$ and configured to:

    ○ identifying one or more areas $S_j$, with j=1,2...N where N is a positive integer, each of which is arranged along said electric cable 1, on a respective plane $P_j$ transverse to the longitudinal axis A of said electric cable 1 and has a geometric shape defined by a closed reference line;

    ○ associating a respective computational domain $DT_J$ with each area $S_j$, as well as associating a respective further computational domain $DE_J$ with a further area which is a portion of said area $S_j$ and is arranged inside said electric cable 1, between said first semiconductive material layer 12 and said second semiconductive material layer 14, wherein said further area is included between a first closed line 120 and a second closed line 140, said computational domain $DT_J$ is. discretized through a set of finite elements $e_{J1}, e_{J2}...e_{JM}$, said further computational domain $DE_J$ is discretized through a further set of finite elements $e_{JX}, e_{JY}...e_{JL}$ (in transversal section said first closed line 120 is a first contact line between the conductor 11 and said first semiconductive material layer 120 and said second closed line 140 is a second contact line between said second semiconductive layer 14 and said shield 15;

    ○ acquiring:

        - a value of temperature $TE_J$ at each area $S_j$ through temperature measuring means $TS_J$;
        - a value of voltage V between said conductor 11 and said shield 15,
        - a value of electric current $I$ flowing along the longitudinal axis A of the conductor 11;

    ○ calculating, by means of a numerical finite element method, a respective temperature distribution $Te_{J1}, Te_{J2}...Te_{JM}$ for each computational domain $DT_J$, wherein each value of temperature of a temperature distribution is associated with a respective finite element $e_{J1}, e_{J2}...e_{JM}$ of a respective computational domain $DT_J$, each temperature distribution being calculated by solving:

        • Fourier's law for conducting heat in transient conditions, starting from said temperature values $TE_J$, from said measured electric current values $I$, and from a predetermined temperature distribution $T_0$;

    ○ calculating, by means of a further numerical finite element method, a respective electric field distribution $Ee_{JX}, Ee_{JY}...E_{JL}$ for each further computational domain $DE_J$, wherein each value of electric field of an electric field distribution is associated with a respective finite element $e_{JX}, e_{JY}...e_{JL}$ of said further computational domain $DE_J$, each electric field distribution being calculated by solving:

        • Gauss's law for an electric field E in transient conditions, applied to each finite element $e_{JY}$ falling into the dielectric material layer 13,
        • the law of continuity of electric current in stationary conditions applied to each finite element $e_{JL}$ which falls in the first semiconductive material layer 12 or in the second semiconductive material layer 14 and which does not contact one or more finite elements $e_{JL}$ which fall into the dielectric material layer 13,
        • Schottky's law referred to an injection of electric charges in correspondence of a contact line between different materials, applied to each finite element $e_{JX}$ which falls into the first semiconductive material layer 12 or in the second semiconductive material layer 14 and contacts one or more finite elements $e_{JY}$ which fall into the dielectric material layer 13,
        • the relationship between electric field E and said voltage $V$, starting from boundary conditions applied to said first closed line 120 and to said second closed line 140 of the respective further computational domain $DE_J$, in which said boundary conditions depend on said voltage value $V$ and on a predetermined electric charge density distribution $\rho_0$.

In other words, said processing unit is configured to perform the steps from A to E of the method disclosed above.

In particular, in the embodiment being disclosed, said system comprises- a voltage measuring voltage 18 for measuring said voltage value $V$ between said conductor 11 and said shield 15 and said processing unit is connected to said voltage measuring device 18 for acquiring said voltage value $V$.

However, said voltage value $V$ can be a predetermined voltage value set by a user and said processing unit can be configured to acquire said predetermined voltage value, according to step C of the method described above.

Furthermore, in the embodiment being disclosed, said system comprise an electric current measuring device 19 for measuring said electric current value $I$ flowing along the longitudinal axis of the conductor 11 and said processing unit is connected to said electric current measuring device 19 for acquiring said electric current value $I$, according to step C of the method described above.

However, said electric current value $I$ can be a predetermined electric current value set by a user and said processing unit can be configured for acquiring said predetermined electric current value.

In particular, said system can comprise storage means (such as a memory) and said processing unit can be connected to said storage means for storing in said storage means said predetermined voltage value and/or said predetermined electric current value, when the voltage value $V$ and the electric current value $I$ are not measured.

With reference to step D of the method, said processing unit can be configured to perform the sub-steps from D1 to D4 and/or from D5 to D6 of said step D.

Furthermore, said processing unit can be configured to perform the steps from F to J of the method disclosed above or to perform in addition or as alternative to said steps from F to J, the steps from I to M of said method.

In particular, said processing unit can be configured to perform the steps from N1 to N4 of the method.

More particularly, said processing unit can be configured to perform the steps from O1 to O6 of the method disclosed above, for obtaining a value of waiting time $t_{RP}$ which is the time to wait before the polarity of said voltage $V$ between said conductor 11 and said shield 15 is inverted after that the value of said voltage $V$ has been set equal to zero, without said maximum value of electric field $E_{MAXJ}$ is greater than said predetermined value of electric field $E_{REF}$:

Furthermore, said processing unit can be configured to store said predetermined temperature distribution $T_0$ and said predetermined electric charge density distribution $\rho_0$, independently of the storage of said predetermined voltage value and/or said predetermined electric current value.

Said processing unit can also be configured to store in said storage means said predetermined electric field value $E_{REF}$ (which is a threshold value) and/or said waiting time $t_{RP}$.

Said system can comprise displaying means, such a display D of the computer C, for displaying the values of one or more quantities calculated using the method described above and/or the values of one or more quantities derived from said calculated quantities.

By way of example, it is possible to display in numerical form or by charts:

- one or more temperature maximum values in the conductor 11 of a respective temperature distribution $Te_{J1}, Te_{J2}...Te_{JM}$ calculated for a respective area $S_j$; and/or
- ore or more temperature maximum values on the outer layer 16 of a respective temperature distribution $Te_{J1}, Te_{J2}...Te_{JM}$ calculated for a respective area $S_j$; and/or

- one or more difference values indicating the temperature difference between the temperature associated with the first closed line 120 and the temperature associated with the second closed line 140 of a respective temperature distribution $Te_{J1}, Te_{J2}...Te_{JM}$ calculated for a respective area $S_j$; and/or
- said electric field distribution $Ee_{JX}, Ee_{JY}...E_{JL}$ and said predetermined electric field $E_{REF}$; and/or
- said electric charge density distribution $\rho e_{JX}, \rho e_{JY}...\rho e_{JL}$; and/or
- one or more temperature maximum values in the conductor 11 of a respective temperature distribution $Te_{J1}, Te_{J2}...Te_{JM}$ calculated along the longitudinal axis A of the electric cable 1 ; and/or
- one or more difference values indicating the temperature difference between the temperature associated with the first closed line 120 and the temperature associated with the second closed line 140 of a respective temperature distribution $Te_{J1}, Te_{J2}...Te_{JM}$ calculated along the longitudinal axis A of the electrical cable 1; and/or
- one or more electric field maximum values of a respective electric field distribution $Ee_{JX}, Ee_{JY}...E_{JL}$ calculated for each area $S_j$ along the longitudinal axis A of the electric cable 1.

Said displaying means can also be used to display:

- the position of the area $S_j$ associated with the temperature maximum value in the conductor 11 obtained by said temperature distribution $Te_{J1}, Te_{J2}...Te_{JM}$ calculated for each area $S_j$; and/or
- the position of the area $S_j$ associated with the electric field maximum value of said electric field distribution $Ee_{JX}, Ee_{JY}...E_{JL}$ calculated for each area $S_j$.

Furthermore, when the polarity of the voltage $V$ between the conductor 11 and the shield 15 of the electric cable 1 is inverted, said displaying means can display:

- the electric field value calculated during step O2; and/or
- the chart of the electric charge density distribution $\rho e_{JX}, \rho e_{JY}...\rho e_{JL}$ referred to an area $S_j$ which is the area in which the maximum value of the electric field is the maximum between the maximum values of electric field; and/or
- the chart of the electric field distribution $Ee_{JX}, Ee_{JY}...E_{JL}$ referred to an area $S_j$ which is the area in which the maximum value of electric field is the maximum between the maximum values of electric field and/or said predetermined electric field value $E_{REF}$.

## Advantages

Advantageously, the method object of the invention allows to calculate, substantially in real time, the electric field within a dielectric material layer of a high voltage electric cable for direct electric current.

A further advantage is given by the fact that this calculation can be performed on any computer, as it requires reduced computational resources.

Furthermore, through the information regarding the electric field and the comparison with a predetermined electric field value, it is possible to monitor the electric stress of said electric cable with respect to the stress for which the electric cable was designed or to a desired stress.

Consequently, it is possible to improve the reliability of the electrical cable and increase the life span of the electrical cable.

The present invention has been described for illustrative, but not limitative purposes, according to its preferred embodiment, but it is to be understood that variations and/or modifications can be carried out by a skilled in the art, without departing from the scope thereof, as defined according to enclosed claims.

## Claims

1. Method for calculating an electric field inside a dielectric material layer (13) of a high voltage electric cable (1) for direct electric current, wherein said electric cable (1) is of the type comprising from the inside towards the outside a conductor (11) having a longitudinal axis (A), a first semiconductive material layer (12), said dielectric material layer (13), a second semiconductive material layer (14), a metallic material layer (15) called shield, said method comprising the following steps:

   A) identifying one or more areas $S_j$, with j=1,2...N where N is a positive integer, each of which is arranged along said electric cable (1), on a respective plane $P_j$ transverse to the longitudinal axis (A) of said electric cable (1) and has a geometric shape defined by a closed reference line;

   B) associating a respective computational domain $DT_J$ with each area $S_j$, as well as associating a respective further computational domain $DE_J$ with a further area which is a portion of said area $S_j$ and is arranged inside said electric cable (1), between said first semiconductive material layer (12) and said second semiconductive material layer (14), wherein said further area is included between a first closed line (120) and a second closed line (140), said computational domain $DT_J$ being discretized through a set of finite elements $e_{J1}, e_{J2}...e_{JM}$, said further computational domain $DE_J$ being discretized through a further set of finite elements $e_{JX}, e_{JY}...e_{JL}$, in transversal section said first closed line (120) being a first contact line between the conductor (11) and said first semiconductive material layer (120) and said second closed line (140) being a second contact line between said second semiconductive layer (14) and said shield (15);

   C) acquiring:

      - a value of temperature $TE_J$ at each area $S_j$ through temperature measuring means ($TS_J$);
      - a value of voltage $V$ between said conductor (11) and said shield (15), wherein said value of voltage $V$ is obtained through a voltage measuring device (18) or is a predetermined value of voltage;
      - a value of electric current $I$ flowing along the longitudinal axis (A) of the conductor (11), wherein said value of electric current $I$ is obtained through an electric current measuring device (19) or is a predetermined value of electric current;

D) calculating, by means of a numerical finite element method, a respective temperature distribution $Te_{J1}, Te_{J2}...Te_{JM}$ for each computational domain $DT_J$, wherein each value of temperature of a temperature distribution is associated with a respective finite element $e_{J1}, e_{J2}...e_{JM}$ of a respective computational domain $DT_J$, each temperature distribution being calculated by solving:

o Fourier's law for conducting heat in transient conditions, starting from said temperature values $TE_J$, from said measured electric current values $I$, and from a predetermined temperature distribution $T_0$;

E) calculating, by means of a further numerical finite element method, a respective electric field distribution $Ee_{JX}, Ee_{JY}...E_{JL}$ for each further computational domain $DE_J$, wherein each value of electric field of an electric field distribution is associated with a respective finite element $e_{JX}, e_{JY}...e_{JL}$ of said further computational domain $DE_J$, each electric field distribution being calculated by solving:

o Gauss's law for an electric field E in transient conditions, applied to each finite element $e_{JY}$ falling into the dielectric material layer (13),
o the law of continuity of electric current in stationary conditions applied to each finite element $e_{JL}$ which falls in the first semiconductive material layer (12) or in the second semiconductive material layer (14) and which does not contact one or more finite elements $e_{JL}$ which fall into the dielectric material layer (13),
o Schottky's law referred to an injection of electric charges in correspondence of a contact line between different materials, applied to each finite element $e_{JX}$ which falls into the first semiconductive material layer (12) or in the second semiconductive material layer (14) and contacts one or more finite elements $e_{JY}$ which fall into the dielectric material layer (13),
o the relationship between electric field E and said voltage $V$,

starting from boundary conditions applied to said first closed line (120) and to said second closed line (140) of the respective further computational domain $D_{EJ}$, in which said boundary conditions depend on said voltage value V and on a predetermined electric charge density distribution $\rho_0$.

2. Method according to claim 1, wherein said method comprises the following steps which are performed periodically at predetermined time intervals $\Delta t$ for each area $S_j$:

F) calculating an electrical conductivity distribution $\sigma e_{JX}, \sigma e_{JY}...\sigma e_{JL}$ for each finite element $e_{JX}, e_{JY}...e_{JL}$ of each further computational domain $DE_J$, starting from said calculated temperature distribution $Te_{J1}, Te_{J2}...Te_{JM}$ and from said calculated electric field distribution $Ee_{JX}, Ee_{JY}...E_{JL}$;
G) calculating an electric current density distribution $Je_{JX}, Je_{JY}...J_{JL}$ for each finite element $e_{JX}, e_{JY}...e_{JL}$ of each further computational domain $DE_J$ through the Ohm's law;
H) calculating a respective value of electric charge density $\rho e_{JX}, \rho e_{JY}...\rho e_{JL}$ for each finite element $e_{JX}, e_{JY}...e_{JL}$ of each further computational domain $DE_J$ by solving:

o the law of continuity of electric current in transient conditions, applied to each finite element $e_{JY}$ of each further computational domain $D_{EJ}$ which falls within the dielectric material layer (13), and
o Gauss's law for an electric field E in stationary conditions, applied to each finite element $e_{JX}, e_{JL}$ of each further computational domain $DE_J$ which falls in the first semiconductive material layer (12) or in the second semiconductive material layer (14);

I) updating said predetermined temperature distribution $T_0$ with the temperature values of said calculated temperature distribution $Te_{J1}, Te_{J2}...Te_{JM}$ and updating said predetermined electric charge density distribution $\rho_0$ with the calculated electric charge density values $\rho e_{JX}, \rho e_{JY}...\rho e_{JL}$;
J) repeating the steps from C to E.

3. Method according to any one of the previous claim, wherein said method comprises the following steps:

K) identifying a respective maximum value of electric field $E_{MAXJ}$ in each further computational domain $DE_J$;
L) comparing each maximum value of electric field $E_{MAXJ}$ with a predetermined value of electric field $E_{REF}$;
M) if said maximum value of electric field $E_{MAXJ}$ is greater than said predetermined value of electric field $E_{REF}$, establishing that at least one section of electrical cable (1) at each said area $S_j$ is subjected to an electrical stress greater than an electrical stress for which said electrical cable (1) was designed or to a predetermined electrical stress.

4.  Method according to any one of the previous claims, wherein

said finite element method at step D solves a respective system of linear equations for each computational domain $DT_J$:

$$A1_j * T_j = B1_j$$

where
$A1_j$ is a first square matrix with a number of rows and a number of columns equal to the number of finite elements $e_{J1}, e_{J2}...e_{JM}$ of said computational domain $DT_J$, and each element of said matrix is a constant numeric coefficient depending on the geometric properties of said computational domain $DT_J$ and from the thermophysical properties of at least one material associated with a finite element corresponding to a portion of said electric cable (1),
$T_j$ is a first column vector with a number of elements equal to the number of finite elements $e_{J1}, e_{J2}...e_{JM}$ of said computational domain $DT_J$ and each element of said first column vector is a value of temperature which is unknown,
$B1_j$ is a further first column vector with a number of elements equal to the number of finite elements $e_{J1}, e_{J2}...e_{JM}$ of said computational domain $DT_J$ and each element is a numeric value variable over time and depending on the boundary conditions of heat exchange between electric cable (1) and external environment, on the temperature of said predetermined temperature distribution $T_0$ associated with each finite element $e_{J1}, e_{J2}...e_{JM}$ of said computational domain $DT_J$, on a thermal power value calculated on the basis of the measured electric current values $I$ flowing in the conductor (11) and the thermophysical properties of at least one material associated with a finite element corresponding to said portion of said electric cable (1), wherein
said step D comprises the following sub-steps:

D1) calculating a respective numeric value associated with each element of each first vector $B1_j$ on the basis of a value of temperature $Te_{J1}, Te_{J2}...Te_{JM}$ associated with each finite element $e_{J1}, e_{J2}...e_{JM}$ of said computational domain $DT_J$ and with the values of thermal power due to the passage of electric current $I$ in the conductor (11) and losses in the dielectric material layer (13);
D2) multiplying said first vector $B1_j$ by a further first matrix $A1_j'$, which is the inverse matrix of said first matrix A1, to obtain a respective value of temperature $Te_{J1}, Te_{J2}...Te_{JM}$ associated with each finite element $e_{J1}, e_{J2}...e_{JM}$ of said computational domain $DT_J$;
D3) for each computational domain $DT_J$ calculating a difference between a respective value of temperature $TE_J$ measured at each area $S_j$ and a respective value of temperature between the calculated values of temperature $Te_{J1}, Te_{J2}...Te_{JM}$, wherein said value of temperature is associated with a respective finite element between the finite elements $e_{J1}, e_{J2}...e_{JM}$ of said computational domain $DT_J$ at which said temperature value has been measured, to obtain a respective temperature variation value $\Delta T_J$;
D4) for each finite element $e_{J1}, e_{J2}...e_{JM}$ of said computational domain $DT_J$ calculating a respective updated value of temperature $Te_{J1}, Te_{J2}...Te_{JM}$ by adding a respective value of temperature obtained at sub-step D2 and a respective value of temperature variation $\Delta T_J$ obtained at sub-step D3.

5.  Method according to any one of the previous claims, wherein said step D comprises the following sub-steps:

D5) calculating a temperature gradient of said temperature distribution $Te_{J1}, Te_{J2}...Te_{JM}$ inside a respective section of said electric cable (1) in each area $S_j$ along a plurality of radial directions, wherein each value of temperature gradient is associated with a respective finite element $e_{J1}, e_{J2}...e_{JM}$ of a respective computational domain $DT_J$, wherein said finite element is arranged inside said electric cable (1); and
D6) identifying a radial direction of said plurality of radial directions associated with a maximum value of said calculated temperature gradient, and
wherein
said electric field distribution $Ee_{JX}, Ee_{JY}...E_{JL}$ at said step E is calculated only along said radial direction identified at sub-step D6, assuming that the respective values of electric field vary only along said radial direction of said electric cable (1).

6.  Method according the claims 2 and 5, wherein the electrical conductivity distribution $\sigma e_{JX}, \sigma e_{JY}...\sigma e_{JL}$ at step F, the electric current density distribution $Je_{JX}, Je_{JY}...J_{JL}$ at step G and each value of electric charge density $\rho e_{JX}, \rho e_{JY}...\rho e_{JL}$ at step H are calculated along said radial direction of said electric cable (1) identified at the sub-step D6.

7. Method according the previous claim, wherein said method further comprises the following steps for taking into account a thermal conduction along the longitudinal axis (A) of the conductor (11):

N1) calculating for each area $S_j$ the mean value of temperature $\overline{T_{cj}}$ in the conductor (11);
N2) calculating:

a first axial temperature gradient $GR1_J$ as a difference between the mean value of temperature $\overline{T_{cj}}$ in the conductor (11) at an area $S_j$ and the mean value of temperature $\overline{T_{cj-1}}$ in the conductor (11) at a previous area $S_{j-1}$ by dividing for a value equal to a first distance $d_1$ between said area $S_j$ and said previous area $S_{j-1}$, and a second axial temperature gradient $GR2_J$ as a difference between the mean value of temperature $\overline{T_{cj+1}}$ in the conductor (11) at an area $S_{j+1}$ and the mean value of temperature $\overline{T_{cj}}$ in the conductor (11) at a previous area $S_j$ by dividing for a value equal to a second distance $d_2$ between said area $S_{j+1}$ and said previous area $S_j$;

N3) multiplying the result due to the difference between said first axial temperature gradient $GR1_J$ and said second axial temperature gradient $GR2_J$ for a mean value of thermal conductivity of the conductor (11) for obtaining a respective thermal power flow value $Q_j$ for each area $S_j$;
N4) for each area $S_j$ calculating, according to a method to discretize differential equations, each element of said further first vector $B1_j$ taking into account said thermal power flow value $Q_j$.

8. Method according to the previous claim, wherein said first distance $d_1$ is equal to said second distance $d_2$.

9. Method according to any one of the previous claims, wherein said further numerical finite element method at step E solves a respective linear equation system for each further computational domain $DE_J$:

$$A2_j*E_j=B2_j$$

where

$A2_j$ is a second square matrix with a number of rows and a number of columns equal to a number of finite elements of said further computational domain $DE_J$ and each element of said matrix is a constant numeric coefficient and depends on the geometric properties of said further computational domain $DE_J$ and on the dielectric properties of at least one of a material associated with said portion of said electric cable (1) which falls inside said further computational domain $DE_J$,
$E_j$ is a second column vector with a number of elements equal to the number of finite elements $e_{JX}, e_{JY}...e_{JL}$ of said further computational domain $DE_J$ and each element is a numeric value of electric field $Ee_{JX}, Ee_{JY}...E_{JL}$ associated with each finite element $e_{JX}, e_{JY}...e_{JL}$ of said further computational domain $DE_J$,
$B2_j$ is a further second column vector with a number of elements equal to the number of finite elements $e_{JX}, e_{JY}...e_{JL}$ of said further computational domain $DE_J$, wherein each element is a numeric value depending on the boundary conditions of electric field $E$, on said value of voltage $V$ and on said predetermined electric charge density distribution $\rho_0$ associated with each finite element $e_{JX}, e_{JY}...e_{JL}$ of said further computational domain $DE_J$.

10. Method according to claims 2 and 3 or according to claims 2 and 3 and any one of claims 4-9, wherein said method further comprises the following steps to obtain a value of waiting time $t_{RP}$ which is the time to wait before the polarity of said voltage $V$ between said conductor (11) and said shield (15) is inverted after that the value of said voltage $V$ has been set equal to zero, without said maximum value of electric field $E_{MAXJ}$ is greater than said predetermined value of electric field $E_{REF}$:

O1) associating a value equal to zero with said waiting time $t_{RP}$;
O2) repeating the steps from C to M or from C to N4 for a predetermined number iterations NI considering a predetermined further time interval $\Delta t_{RP}$, wherein said value of voltage $V$ and said value of electric current $I$ have been set equal to zero;
O3) for each iteration, adding the value of said predetermined further time interval $\Delta t_{RP}$ to a respective value of waiting time $t_{RP}$ to obtain a respective updated value of waiting time $t_{RP}$;
04) repeating the steps from C to M or from C to N4 for a predetermined further number of iterations MI considering said predetermined further time interval $\Delta t_{RP}$, wherein said value of voltage $V$ is in absolute value equal to a nominal voltage value and has a sign opposite to the sign of said value of voltage V before the polarity of said voltage $V$ is inverted, and said value of electric current $I$ is equal to zero;

O5) identifying for each area $S_j$ the maximum value of electric field $E_{MAXJ}$ and identify for each iteration of said predetermined further number of iterations MI a respective maximum value of electric field $E_{MAXRP}$ between said maximum values of electric field, wherein said maximum value of electric field $E_{MAXRP}$ is the maximum value of electric field reached after an inversion of polarity of the voltage $V$ between said conductor (11) and said shield (15) with a waiting time equal to the waiting time $t_{RP}$;

06) repeating the steps from O1 to O5 by progressively increasing said predetermined number of iterations NI until the maximum value of electric field $E_{MAXRP}$ is less than or equal to said predetermined value of electric field $E_{REF}$ and storing the value of waiting time $t_{RP}$ corresponding to said maximum value of electric field $E_{MAXRP}$.

11. Method according to any one of the claims 1-10, wherein said area $S_j$ is outside said electric cable (1).

12. Method according to any one of the claims 1-10, wherein said area $S_j$ is inside said electric cable (1).

13. Method according to any one of claims 1-12, wherein

said electric cable (1) comprises an external layer (16), and
wherein
said temperature measuring means ($TS_J$) comprise a plurality of temperature sensors ($TS_{1J}$) for measuring a temperature at a respective area $S_j$ and said temperature sensors are arranged inside said electric cable (1) or a respective portion of said external layer (16) or at a predetermined distance from said external layer (16).

14. Method according to any one of claims 1-12, wherein

said electric cable (1) comprises an external layer (16), and
wherein
said temperature measuring means comprise a temperature distributed sensor with a longitudinal resolution for measuring a temperature at each area $S_j$ and said temperature distributed sensor is arranged inside said electric cable (1) or on said external layer (16) or at a predetermined distance from said external layer (16).

15. System for calculating an electric field inside a dielectric material layer (13) of a high voltage electric cable (1) for direct electric current, wherein said electric cable (1) is of the type comprising from the inside towards the external a conductor (11) having a longitudinal axis (A), a first semiconductive material layer (12), said dielectric material layer (13), a second semiconductive material layer (14), a metallic material layer (15) called shield, said system comprising:

- temperature measuring means ($TS_J$) for measuring a value of temperature at one or more areas $S_j$, with j=1,2...N where N is a positive integer, each of which is arranged along said electric cable (1) on a respective plane $P_j$ transverse to the longitudinal axis (A) of said electric cable (1) and has a geometric shape defined from a closed reference line;
- a processing unit connected to said temperature measuring means ($TS_J$) and configured to perform the steps of the method according to any one of the previous claims.

16. System according to the previous claim, wherein said system comprises:

- a voltage measuring device (18) for measuring a value of voltage $V$ between said conductor (11) and said shield (15);
- an electric current measuring device (19) for measuring a value of electric current $I$ flowing along the longitudinal axis (A) of the conductor (11);

wherein
said processing unit is connected to said voltage measuring device (18) and to said electric current measuring device (19) and configured to acquire a value of voltage $V$ through said voltage measuring device (18) and said value of electric current $I$ through said electric current measuring device (19).

17. System according to claim 15, wherein, said system comprises storage means and said processing is connected to said storage means is configured to store a predetermined value of voltage and/or a predetermined value of electric current and to acquire said predetermined value of voltage and/or said predetermined value of electric current from said storage means.

18. System according the claim 15 or 16, wherein, said system comprises storage means and said processing unity is connected to said storage means and configured to store said predetermined temperature distribution $T_0$ and said predetermined electric charge density distribution $\rho_0$.

**Patentansprüche**

1. Verfahren zur Berechnung des elektrischen Feldes innerhalb einer dielektrischen Materialschicht (13) eines elektrischen Hochspannungskabels (1) für elektrischen Gleichstrom, **dadurch gekennzeichnet, dass** das elektrische Kabel (1) von dem Typ ist, der von innen nach außen einen Leiter (11) mit einer Längsachse (A), eine erste Schicht (12) aus halbleitendem Material, die Schicht (13) aus dielektrischem Material, eine zweite Schicht (14) aus halbleitendem Material und eine Schicht (15) aus metallischem Material, die Abschirmung genannt wird, umfasst, wobei das Verfahren die folgenden Schritte umfasst:

A) Identifizierung eines oder mehrerer Bereiche $S_j$, mit j=1,2...N, wobei N eine positive ganze Zahl ist, von denen jeder entlang des elektrischen Kabels (1) auf einer entsprechenden Ebene $P_j$ quer zur Längsachse (A) des elektrischen Kabels (1) angeordnet ist und eine geometrische Form aufweist, die durch eine geschlossene Bezugslinie definiert ist;

B) Zuordnen eines jeweiligen Berechnungsbereichs $DT_J$ zu jedem Bereich $S_j$ sowie Zuordnen eines jeweiligen weiteren Berechnungsbereichs $DE_J$ zu einem weiteren Bereich, der ein Teil des Bereichs $S_j$ ist und innerhalb des elektrischen Kabels (1) angeordnet ist, zwischen der ersten Halbleitermaterialschicht (12) und der zweiten Halbleitermaterialschicht (14) angeordnet ist, wobei der weitere Bereich zwischen einer ersten geschlossenen Linie (120) und einer zweiten geschlossenen Linie (140) eingeschlossen ist, wobei die Berechnungsdomäne $DT_J$ durch einen Satz von finiten Elementen $e_{J1}, e_{J2}...e_{JM}$ diskretisiert ist, wobei der weitere Berechnungsbereich $DE_J$ durch einen weiteren Satz von finiten Elementen $e_{JX}, e_{JY}...e_{JL}$ diskretisiert ist, wobei im Querschnitt die erste geschlossene Linie (120) eine erste Kontaktlinie zwischen dem Leiter (11) und der ersten Halbleitermaterialschicht (120) ist und die zweite geschlossene Linie (140) eine zweite Kontaktlinie zwischen der zweiten Halbleiterschicht (14) und der Abschirmung (15) ist;

C) Erwerben:

- einen Wert der Temperatur $TE_J$ in jedem Bereich $S_j$ durch Temperaturmessmittel ($TS_J$);
- einen Wert der Spannung $V$ zwischen dem Leiter (11) und der Abschirmung (15), wobei der Wert der Spannung $V$ durch eine Spannungsmessvorrichtung (18) erhalten wird oder ein vorbestimmter Spannungswert ist;
- einen Wert des elektrischen Stroms $I$, der entlang der Längsachse (A) des Leiters (11) fließt, wobei der Wert des elektrischen Stroms $I$ durch eine elektrische Strommessvorrichtung (19) erhalten wird oder ein vorbestimmter Wert des elektrischen Stroms ist;

D) Berechnen, mittels einer numerischen Finite-Elemente-Methode, einer jeweiligen Temperaturverteilung $Te_{J1}, Te_{J2}...Te_{JM}$ für jede Berechnungsdomäne $DT_J$, wobei jeder Temperaturwert einer Temperaturverteilung mit einem jeweiligen finiten Element $e_{J1}, e_{J2}...e_{JM}$ einer jeweiligen Berechnungsdomäne $DT_J$ verbunden ist, wobei jede Temperaturverteilung durch Lösen berechnet wird:

o Das Fouriersche Gesetz für die Wärmeleitung unter instationären Bedingungen,

ausgehend von den Temperaturwerten $TE_J$, von den gemessenen elektrischen Stromwerten $I$ und von einer vorgegebenen Temperaturverteilung $T_0$;

E) Berechnen, mittels einer weiteren numerischen Finite-Elemente-Methode, einer jeweiligen elektrischen Feldverteilung $Ee_{JX}, Ee_{JY}...E_{JL}$ für jede weitere Berechnungsdomäne $DE_J$, wobei jeder Wert des elektrischen Feldes einer elektrischen Feldverteilung mit einem jeweiligen finiten Element $e_{JX}, e_{JY}...e_{JL}$ der weiteren Berechnungsdomäne $DE_J$ verbunden ist, wobei jede elektrische Feldverteilung durch Lösen berechnet wird:

o Gaußsches Gesetz für ein elektrisches Feld E unter instationären Bedingungen, angewendet auf jedes finite Element $e_{JY}$, das in die dielektrische Materialschicht fällt (13),
o das Gesetz der Kontinuität des elektrischen Stroms unter stationären Bedingungen, das auf jedes endliche Element $e_{JL}$ angewandt wird, das in die erste Schicht (12) aus halbleitendem Material oder in die zweite Schicht (14) aus halbleitendem Material fällt und das nicht mit einem oder mehreren endlichen Elementen $e_{JL}$ in Kontakt steht, die in die Schicht (13) aus dielektrischem Material fallen,

o Das Schottkyische Gesetz bezieht sich auf eine Injektion elektrischer Ladungen entsprechend einer Kontaktlinie zwischen verschiedenen Materialien, die auf jedes endliche Element $e_{JX}$ angewendet wird, das in die erste Halbleitermaterialschicht (12) oder in die zweite Halbleitermaterialschicht (14) fällt und ein oder mehrere endliche Elemente $e_{JY}$ kontaktiert, die in die dielektrische Materialschicht (13) fallen,

o die Beziehung zwischen dem elektrischen Feld E und der genannten Spannung *V*,

ausgehend von Randbedingungen, die auf die erste geschlossene Leitung (120) und auf die zweite geschlossene Leitung (140) des jeweiligen weiteren Berechnungsbereichs $DE_J$ angewendet werden, wobei die Randbedingungen von dem Spannungswert *V* und von einer vorbestimmten elektrischen Ladungsdichteverteilung $p_0$ abhängen.

2. Verfahren nach Anspruch 1, wobei das Verfahren die folgenden Schritte umfasst, die periodisch in vorgegebenen Zeitintervallen $\Delta t$ für jedes Gebiet $S_j$ durchgeführt werden:

F) Berechnen einer elektrischen Leitfähigkeitsverteilung $\sigma e_{JX}, \sigma e_{JY}...\sigma e_{JL}$ für jedes finite Element $e_{JX}, e_{JY}...e_{JL}$ jedes weiteren Berechnungsbereichs $DE_J$, ausgehend von der berechneten Temperaturverteilung $Te_{J1}, Te_{J2}...Te_{JM}$ und der berechneten elektrischen Feldverteilung $Ee_{JX}, Ee_{JY}...E_{JL}$;

G) Berechnung einer elektrischen Stromdichteverteilung $Je_{JX}, Je_{JY}...J_{JL}$ für jedes finite Element $e_{JX}, e_{JY}...e_{JL}$ jedes weiteren Berechnungsgebietes $DE_J$ durch das Ohmische Gesetz;

H) Berechnung eines jeweiligen Werts der elektrischen Ladungsdichte $pe_{JX}, pe_{JY}... pe_{JL}$ für jedes finite Element $e_{JX}, e_{JY}...e_{JL}$ jedes weiteren Rechengebiets $_{DEJ}$ durch Lösen:

o das Gesetz der Kontinuität des elektrischen Stroms unter instationären Bedingungen, angewandt auf jedes finite Element $e_{JY}$ jedes weiteren Berechnungsbereichs $DE_J$, der in die dielektrische Materialschicht (13) fällt, und

o Gaußsches Gesetz für ein elektrisches Feld E unter stationären Bedingungen, angewandt auf jedes finite Element $e_{JX}$, $e_{JL}$ jedes weiteren Berechnungsgebiets $DE_J$, das in die erste Halbleitermaterialschicht (12) oder in die zweite Halbleitermaterialschicht (14) fällt;

I) Aktualisieren der vorbestimmten Temperaturverteilung $T_0$ mit den Temperaturwerten der berechneten Temperaturverteilung $Te_{J1}, Te_{J2}...Te_{JM}$ und Aktualisieren der vorbestimmten elektrischen Ladungsdichteverteilung $p_0$ mit den berechneten elektrischen Ladungsdichtewerten $pe_{JX}, pe_{JY}...pe_{JL}$;

J) Wiederholung der Schritte von C bis E.

3. Verfahren nach einem der vorhergehenden Ansprüche, wobei das Verfahren die folgenden Schritte umfasst:

K) die einen jeweiligen Maximalwert des elektrischen Feldes $E_{MAXJ}$ in jedem weiteren Berechnungsgebiet $DE_J$ bestimmen;

L) Vergleich jedes Maximalwertes des elektrischen Feldes $E_{MAXJ}$ mit einem vorgegebenen Wert des elektrischen Feldes $E_{REF}$;

M), wenn der Maximalwert des elektrischen Feldes $E_{MAXJ}$ größer ist als der vorbestimmte Wert des elektrischen Feldes $E_{REF}$, wodurch festgestellt wird, dass mindestens ein Abschnitt des elektrischen Kabels (1) in jedem der Bereiche $S_j$ einer elektrischen Spannung ausgesetzt ist, die größer ist als eine elektrische Spannung, für die das elektrische Kabel (1) ausgelegt wurde, oder einer vorbestimmten elektrischen Spannung.

4. Verfahren nach einem der vorhergehenden Ansprüche, wobei die Finite-Elemente-Methode in Schritt D ein entsprechendes System linearer Gleichungen für jedes Berechnungsgebiet $DT_J$ löst:

$$A1_j * T_j = B1_j$$

wobei

$A1_j$ eine erste quadratische Matrix mit einer Anzahl von Zeilen und einer Anzahl von Spalten ist, die gleich der Anzahl von finiten Elementen $e_{J1}, e_{J2}...e_{JM}$ des besagten Rechengebiets $DT_J$ ist, und jedes Element der besagten Matrix ein konstanter numerischer Koeffizient ist, der von den geometrischen Eigenschaften des besagten Rechengebiets $DT_J$ und von den thermophysikalischen Eigenschaften mindestens eines Materials abhängt, das einem finiten Element zugeordnet ist, das einem Teil des besagten elektrischen Kabels (1) entspricht,

$T_j$ ist ein erster Spaltenvektor mit einer Anzahl von Elementen, die gleich der Anzahl der finiten Elemente $e_{J1}, e_{J2}...e_{JM}$ des Berechnungsbereichs $DT_J$ ist, und jedes Element des ersten Spaltenvektors ist ein Temperaturwert, der unbekannt ist,

$B1_j$ ein weiterer erster Spaltenvektor mit einer Anzahl von Elementen ist, die gleich der Anzahl der finiten Elemente $e_{J1}, e_{J2}...e_{JM}$ des Berechnungsbereichs $DT_J$ ist, und jedes Element ein numerischer Wert ist, der zeitlich variabel ist und von den Randbedingungen des Wärmeaustauschs zwischen dem elektrischen Kabel (1) und der äußeren Umgebung abhängt, von der Temperatur der vorbestimmten Temperaturverteilung $T_0$, die mit jedem finiten Element $e_{J1}, e_{J2}...e_{JM}$ des Berechnungsbereichs $DT_J$ zugeordnet ist, von einem Wärmeleistungswert, der auf der Grundlage der gemessenen elektrischen Stromwerte $I$, die in dem Leiter (11) fließen, und der thermophysikalischen Eigenschaften mindestens eines Materials berechnet wird, das einem finiten Element zugeordnet ist, das dem Abschnitt des elektrischen Kabels (1) entspricht, wobei

der genannte Schritt D umfasst die folgenden Teilschritte:

D1) Berechnen eines jeweiligen numerischen Wertes, der jedem Element jedes ersten Vektors $B1_j$ zugeordnet ist, auf der Grundlage eines Temperaturwertes $Te_{J1}, Te_{J2}...Te_{JM}$, der jedem finiten Element $e_{J1}, e_{J2}...e_{JM}$ des Berechnungsbereichs $DT_J$ zugeordnet ist, und mit den Werten der thermischen Leistung aufgrund des Durchgangs von elektrischem Strom I in dem Leiter (11) und der Verluste in der Schicht aus dielektrischem Material (13);

D2) Multiplizieren des ersten Vektors $B1_j$ mit einer weiteren ersten Matrix $A1_j'$, die die inverse Matrix der ersten Matrix A1 ist, um einen jeweiligen Wert der Temperatur $Te_{J1}, Te_{J2}...Te_{JM}$ zu erhalten, der mit jedem finiten Element $e_{J1}, e_{J2}...e_{JM}$ des Berechnungsbereichs $DT_J$ verbunden ist;

D3) für jede Berechnungsdomäne $DT_J$ Berechnen einer Differenz zwischen einem jeweiligen Temperaturwert $TE_J$, der in jedem Bereich $S_j$ gemessen wurde, und einem jeweiligen Temperaturwert zwischen den berechneten Temperaturwerten $Te_{J1}, Te_{J2}...Te_{JM}$, wobei der Temperaturwert mit einem jeweiligen finiten Element zwischen den finiten Elementen $e_{J1}, e_{J2}...e_{JM}$ der Berechnungsdomäne $DT_J$ verbunden ist, an dem der Temperaturwert gemessen wurde, um einen jeweiligen Temperaturänderungswert $\Delta T_J$ zu erhalten;

D4) für jedes finite Element $e_{J1}, e_{J2}...e_{JM}$ des Rechengebiets $DT_J$ Berechnung eines jeweiligen aktualisierten Temperaturwerts $Te_{J1}, Te_{J2}...Te_{JM}$ durch Addition eines jeweiligen Temperaturwerts, der in Unterschritt D2 erhalten wurde, und eines jeweiligen Werts der Temperaturänderung $\Delta T_J$, der in Unterschritt D3 erhalten wurde.

5. Verfahren nach einem der vorhergehenden Ansprüche, wobei der Schritt D die folgenden Teilschritte umfasst:

D5) Berechnen eines Temperaturgradienten der Temperaturverteilung $Te_{J1}, Te_{J2}...Te_{JM}$ innerhalb eines jeweiligen Abschnitts des elektrischen Kabels (1) in jedem Bereich $S_j$ entlang einer Vielzahl von radialen Richtungen, wobei jeder Wert des Temperaturgradienten einem jeweiligen finiten Element $e_{J1}, e_{J2}...e_{JM}$ eines jeweiligen Berechnungsbereichs $DT_J$ zugeordnet ist, wobei das finite Element innerhalb des elektrischen Kabels (1) angeordnet ist; und

D6) Identifizieren einer radialen Richtung aus der Vielzahl der radialen Richtungen, die mit einem Maximalwert des berechneten Temperaturgradienten verbunden ist, und wobei

die elektrische Feldverteilung $Ee_{JX}, E_{EJY}...E_{JL}$ im Schritt E nur entlang der im Unterschritt D6 identifizierten radialen Richtung berechnet wird, wobei angenommen wird, dass die jeweiligen Werte des elektrischen Feldes nur entlang der radialen Richtung des elektrischen Kabels (1) variieren.

6. Verfahren nach den Ansprüchen 2 und 5, bei dem die elektrische Leitfähigkeitsverteilung $\sigma e_{JX}, \sigma e_{JY}...\sigma e_{JL}$ im Schritt F, die elektrische Stromdichteverteilung $Je_{JX}, Je_{JY}...J_{JL}$ im Schritt G und jeder Wert der elektrischen Ladungsdichte $pe_{JX}, pe_{JY}...pe_{JL}$ im Schritt H entlang der radialen Richtung des im Unterschritt D6 identifizierten elektrischen Kabels (1) berechnet werden.

7. Verfahren nach dem vorhergehenden Anspruch, wobei das Verfahren ferner die folgenden Schritte umfasst, um eine Wärmeleitung entlang der Längsachse (A) des Leiters (11) zu berücksichtigen:

N1) Berechnung des Mittelwerts der Temperatur $\overline{T_{cj}}$ für jeden Bereich $S_j$ im Leiter (11);

N2) Berechnen:

einen ersten axialen Temperaturgradienten $GR1_J$ als Differenz zwischen dem Mittelwert der Temperatur $\overline{T_{cj}}$ in dem Leiter (11) in einem Bereich $S_j$ und dem Mittelwert der Temperatur $\overline{T_{cj-1}}$ in dem Leiter (11) in einem vorherigen Bereich $S_{j-1}$ durch Dividieren durch einen Wert, der gleich einem ersten Abstand $d_1$ zwischen dem Bereich $S_j$ und dem vorherigen Bereich $S_{j-1}$ ist, und

einen zweiten axialen Temperaturgradienten $GR2_J$ als Differenz zwischen dem Mittelwert der Temperatur $\overline{T_{cj+1}}$ in dem Leiter (11) in einem Bereich $S_{j+1}$ und dem Mittelwert der Temperatur $\overline{T_{cj}}$ im Leiter (11) in einem vorhergehenden Bereich $S_j$ durch Dividieren durch einen Wert, der gleich einem zweiten Abstand $d_2$ zwischen dem Bereich $S_{j+1}$ und dem vorhergehenden Bereich $S_j$ ist;

N3) Multiplizieren des Ergebnisses aufgrund der Differenz zwischen dem ersten axialen Temperaturgradienten $GR1_J$ und dem zweiten axialen Temperaturgradienten $GR2_J$ mit einem Mittelwert der Wärmeleitfähigkeit des Leiters (11), um einen entsprechenden Wärmeleistungsflusswert $Q_j$ für jeden Bereich $S_j$ zu erhalten;

N4) für jedes Gebiet $S_{ji}$ das nach einem Verfahren zur Diskretisierung von Differentialgleichungen jedes Element des weiteren ersten Vektors $B1_j$ unter Berücksichtigung des thermischen Leistungsflusswertes $Q_j$ berechnet.

8. Verfahren nach dem vorhergehenden Anspruch, wobei der erste Abstand $d_1$ gleich dem zweiten Abstand $d_2$ ist.

9. Verfahren nach einem der vorhergehenden Ansprüche, wobei das weitere numerische Finite-Elemente-Verfahren im Schritt E ein entsprechendes lineares Gleichungssystem für jedes weitere Berechnungsgebiet $DE_J$ löst:

$$A2_j * E_j = B2_j$$

wobei

$A2_j$ eine zweite quadratische Matrix mit einer Anzahl von Zeilen und einer Anzahl von Spalten ist, die gleich einer Anzahl von finiten Elementen des weiteren Berechnungsbereichs $DE_J$ ist, und jedes Element der Matrix ein konstanter numerischer Koeffizient ist und von den geometrischen Eigenschaften des weiteren Berechnungsbereichs $DE_J$ und von den dielektrischen Eigenschaften von mindestens einem Material abhängt, das mit dem Abschnitt des elektrischen Kabels (1) verbunden ist, der in den weiteren Berechnungsbereich $DE_J$ fällt,

$E_j$ ist ein zweiter Spaltenvektor mit einer Anzahl von Elementen, die gleich der Anzahl von finiten Elementen $e_{JX}, e_{JY}...e_{JL}$ des weiteren Berechnungsbereichs $DE_J$ ist, und jedes Element ist ein numerischer Wert des elektrischen Feldes $Ee_{JX}, Ee_{JY}...E_{JL}$, der mit jedem finiten Element $e_{JX}, e_{JY}...e_{JL}$ des weiteren Berechnungsbereichs $DE_J$ verbunden ist,

$B2_j$ ein weiterer zweiter Spaltenvektor mit einer Anzahl von Elementen ist, die gleich der Anzahl von finiten Elementen $e_{JX}, e_{JY}...e_{JL}$ des weiteren Berechnungsbereichs $DE_J$ ist, wobei jedes Element ein numerischer Wert ist, der von den Randbedingungen des elektrischen Feldes E, von dem Wert der Spannung V und von der vorbestimmten elektrischen Ladungsdichteverteilung $p_0$ abhängt, die jedem finiten Element $e_{JX}, e_{JY}...e_{JL}$ des weiteren Berechnungsbereichs $DE_J$ zugeordnet ist.

10. Verfahren nach den Ansprüchen 2 und 3 oder nach den Ansprüchen 2 und 3 und einem der Ansprüche 4-9, wobei das Verfahren ferner die folgenden Schritte umfasst, um einen Wert der Wartezeit $t_{RP}$ zu erhalten, der die Zeit ist, die zu warten ist, bevor die Polarität der Spannung V zwischen dem Leiter (11) und der Abschirmung (15) umgekehrt wird, nachdem der Wert der Spannung V gleich Null gesetzt wurde, ohne dass der Maximalwert des elektrischen Feldes $E_{MAXJ}$ größer ist als der vorbestimmte Wert des elektrischen Feldes $E_{REF}$:

O1) Zuordnen eines Wertes gleich Null zu der Wartezeit $t_{RP}$;

O2) Wiederholen der Schritte von C bis M oder von C bis N4 für eine vorbestimmte Anzahl von Iterationen NI unter Berücksichtigung eines vorbestimmten weiteren Zeitintervalls $\Delta t_{RP}$, wobei der Wert der Spannung V und der Wert des elektrischen Stroms I gleich Null gesetzt wurden;

O3) für jede Iteration Addition des Wertes des vorbestimmten weiteren Zeitintervalls $\Delta t_{RP}$ zu einem jeweiligen Wert der Wartezeit $t_{RP}$, um einen jeweiligen aktualisierten Wert der Wartezeit $t_{RP}$ zu erhalten;

O4) Wiederholen der Schritte von C bis M oder von C bis N4 für eine vorbestimmte weitere Anzahl von Iterationen MI unter Berücksichtigung des vorbestimmten weiteren Zeitintervalls $\Delta t_{RP}$, wobei der Wert der Spannung V im Absolutwert gleich einem Nennspannungswert ist und ein Vorzeichen hat, das dem Vorzeichen des Werts der Spannung V entgegengesetzt ist, bevor die Polarität der Spannung V invertiert wird, und der Wert des elektrischen Stroms I gleich Null ist;

O5) Identifizieren des Maximalwertes des elektrischen Feldes $E_{MAXJ}$ für jeden Bereich $S_j$ und Identifizieren eines jeweiligen Maximalwertes des elektrischen Feldes $E_{MAXRP}$ zwischen den Maximalwerten des elektrischen Feldes für jede Iteration der vorbestimmten weiteren Anzahl von Iterationen MI, wobei der Maximalwert des elektrischen Feldes $E_{MAXRP}$ der Maximalwert des elektrischen Feldes ist, der nach einer Umkehrung der Polarität der Spannung V zwischen dem Leiter (11) und der Abschirmung (15) mit einer Wartezeit gleich der Wartezeit $t_{RP}$ erreicht wird;

O6) Wiederholen der Schritte von O1 bis O5 durch progressives Erhöhen der vorbestimmten Anzahl von Iterationen NI, bis der Maximalwert des elektrischen Feldes $E_{MAXRP}$ kleiner oder gleich dem vorbestimmten Wert des elektrischen Feldes $E_{REF}$ ist, und Speichern des Wertes der Wartezeit $t_{RP}$, der dem Maximalwert des elektrischen Feldes $E_{MAXRP}$ entspricht.

**11.** Verfahren nach einem der Ansprüche 1-10, wobei der Bereich $S_j$ außerhalb des elektrischen Kabels (1) liegt.

**12.** Verfahren nach einem der Ansprüche 1-10, wobei sich der Bereich $S_j$ im Inneren des elektrischen Kabels (1) befindet.

**13.** Verfahren nach einem der Ansprüche 1 bis 12, wobei das elektrische Kabel (1) eine äußere Schicht (16) aufweist, und wobei

die Temperaturmessmittel ($TS_J$) eine Vielzahl von Temperatursensoren ($TS_{1J}$) zum Messen einer Temperatur in einem jeweiligen Bereich $S_j$ umfassen und die Temperatursensoren innerhalb des elektrischen Kabels (1) oder eines jeweiligen Abschnitts der äußeren Schicht (16) oder in einem vorgegebenen Abstand von der äußeren Schicht (16) angeordnet sind.

**14.** Verfahren nach einem der Ansprüche 1-12, wobei das elektrische Kabel (1) eine äußere Schicht (16) aufweist, und wobei

die Temperaturmessmittel einen temperaturverteilten Sensor mit einer Längsauflösung zum Messen einer Temperatur in jedem Bereich $S_j$ umfassen und der temperaturverteilte Sensor innerhalb des elektrischen Kabels (1) oder auf der äußeren Schicht (16) oder in einem vorbestimmten Abstand von der äußeren Schicht (16) angeordnet ist.

**15.** System zur Berechnung eines elektrischen Feldes im Inneren einer Schicht (13) aus dielektrischem Material eines elektrischen Hochspannungskabels (1) für elektrischen Gleichstrom, **dadurch gekennzeichnet, dass** das besagte elektrische Kabel (1) von dem Typ ist, der von innen nach außen einen Leiter (11) mit einer Längsachse (A), eine erste Schicht (12) aus halbleitendem Material, die besagte Schicht (13) aus dielektrischem Material, eine zweite Schicht (14) aus halbleitendem Material und eine Schicht (15) aus metallischem Material, Abschirmung genannt, umfasst, wobei das besagte System Folgendes umfasst:

- Temperaturmessmittel ($TS_J$) zum Messen eines Temperaturwerts an einem oder mehreren Bereichen $S_j$, wobei j=1,2...N ist, wobei N eine positive ganze Zahl ist, von denen jedes entlang des elektrischen Kabels (1) auf einer jeweiligen Ebene $P_j$ quer zur Längsachse (A) des elektrischen Kabels (1) angeordnet ist und eine geometrische Form hat, die von einer geschlossenen Referenzlinie aus definiert ist;
- eine Verarbeitungseinheit, die mit dem Temperaturmessmittel ($TS_J$) verbunden ist und so konfiguriert ist, dass sie die Schritte des Verfahrens nach einem der vorhergehenden Ansprüche ausführt.

**16.** System nach dem vorhergehenden Anspruch, wobei das System umfasst:

- eine Spannungsmessvorrichtung (18) zum Messen eines Spannungswertes V zwischen dem Leiter (11) und der Abschirmung (15);
- eine Messvorrichtung für elektrischen Strom (19) zum Messen eines Wertes des elektrischen Stroms, der entlang der Längsachse (A) des Leiters (11) fließt;

wobei

die Verarbeitungseinheit mit der Spannungsmessvorrichtung (18) und der Strommessvorrichtung (19) verbunden ist und so konfiguriert ist, dass sie einen Wert der Spannung V durch die Spannungsmessvorrichtung (18) und den Wert des elektrischen Stroms I durch die Strommessvorrichtung (19) erfasst.

**17.** System nach Anspruch 15, wobei das System Speichermittel umfasst und die Verarbeitung mit den Speichermitteln verbunden ist, um einen vorbestimmten Spannungswert und/oder einen vorbestimmten Wert des elektrischen Stroms zu speichern und den vorbestimmten Spannungswert und/oder den vorbestimmten Wert des elektrischen Stroms aus den Speichermitteln zu erfassen.

18. System nach Anspruch 15 oder 16, wobei das System Speichermittel umfasst und die Verarbeitungseinheit mit den Speichermitteln verbunden ist und so konfiguriert ist, dass sie die vorbestimmte Temperaturverteilung $T_0$ und die vorbestimmte elektrische Ladungsdichteverteilung speichert $\rho_0$.

**Revendications**

1. Méthode de calcul d'un champ électrique à l'intérieur d'une couche de matériau diélectrique (13) d'un câble électrique haute tension (1) pour courant électrique continu, dans lequel ledit câble électrique (1) est du type comprenant de l'intérieur vers l'extérieur un conducteur (11) ayant un axe longitudinal (A), une première couche de matériau semi-conducteur (12), ladite couche de matériau diélectrique (13), une seconde couche de matériau semi-conducteur (14), une couche de matériau métallique (15) appelée blindage, ledit procédé comprenant les étapes suivantes:

   A) identifier une ou plusieurs zones $S_j$, avec j=1,2...N où N est un nombre entier positif, chacune d'entre elles étant disposée le long dudit câble électrique (1), sur un plan respectif $P_j$ transversal à l'axe longitudinal (A) dudit câble électrique (1) et ayant une forme géométrique définie par une ligne de référence fermée;
   B) associer un domaine de calcul $DT_J$ respectif à chaque zone $S_j$, ainsi qu'associer un autre domaine de calcul $DE_J$ respectif à une autre zone qui est une partie de ladite zone $S_j$ et qui est disposée à l'intérieur dudit câble électrique (1), entre ladite première couche de matériau semi-conducteur (12) et ladite deuxième couche de matériau semi-conducteur (14), dans laquelle ladite zone supplémentaire est comprise entre une première ligne fermée (120) et une deuxième ligne fermée (140), ledit domaine de calcul $DT_J$ étant discrétisé par un ensemble d'éléments finis $e_{J1},e_{J2}....e_{JM}$, ledit autre domaine de calcul $DE_J$ étant discrétisé par un autre ensemble d'éléments finis $e_{JX},e_{JY}...e_{JL}$, en section transversale, ladite première ligne fermée (120) étant une première ligne de contact entre le conducteur (11) et ladite première couche de matériau semi-conducteur (120) et ladite deuxième ligne fermée (140) étant une deuxième ligne de contact entre ladite deuxième couche semi-conductrice (14) et ledit bouclier (15);
   C) acquérir:

   - une valeur de la température $TE_J$ dans chaque zone $S_j$ grâce à des moyens de mesure de la température ($TS_J$);
   - une valeur de tension $V$ entre ledit conducteur (11) et ledit blindage (15), cette valeur de tension $V$ étant obtenue par un dispositif de mesure de tension (18) ou étant une valeur de tension prédéterminée;
   - une valeur de courant électrique $I$ circulant le long de l'axe longitudinal (A) du conducteur (11), cette valeur de courant électrique $I$ étant obtenue au moyen d'un dispositif de mesure du courant électrique (19) ou étant une valeur prédéterminée de courant électrique;

   D) calculer, au moyen d'une méthode numérique par éléments finis, une distribution de température respective $Te_{J1},Te_{J2}...Te_{JM}$ pour chaque domaine de calcul $DT_J$, où chaque valeur de température d'une distribution de température est associée à un élément fini respectif $e_{J1},e_{J2}...e_{JM}$ d'un domaine de calcul $DT_J$ respectif, chaque distribution de température étant calculée en résolvant:

   o La loi de Fourier pour la conduite de la chaleur dans des conditions transitoires,

   à partir des valeurs de température $TE_J$, des valeurs de courant électrique mesurées I et d'une distribution de température prédéterminée $T_0$;
   E) calculer, au moyen d'une autre méthode numérique par éléments finis, une distribution de champ électrique respective $Ee_{JX},Ee_{JY}...E_{JL}$ pour chaque domaine de calcul supplémentaire $DE_J$, où chaque valeur de champ électrique d'une distribution de champ électrique est associée à un élément fini respectif $e_{JX},e_{JY}...e_{JL}$ dudit domaine de calcul supplémentaire $DE_J$, chaque distribution de champ électrique étant calculée en résolvant:

   o Loi de Gauss pour un champ électrique E en conditions transitoires, appliquée à chaque élément fini $e_{JY}$ tombant dans la couche de matériau diélectrique (13),
   o la loi de continuité du courant électrique en régime stationnaire appliquée à chaque élément fini $e_{JL}$ qui tombe dans la première couche de matériau semi-conducteur (12) ou dans la deuxième couche de matériau semi-conducteur (14) et qui n'entre pas en contact avec un ou plusieurs éléments finis $e_{JL}$ qui tombent dans la couche de matériau diélectrique (13),

o La loi de Schottky se réfère à une injection de charges électriques en correspondance d'une ligne de contact entre différents matériaux, appliquée à chaque élément fini $e_{JX}$ qui tombe dans la première couche de matériau semi-conducteur (12) ou dans la deuxième couche de matériau semi-conducteur (14) et contacte un ou plusieurs éléments finis $e_{JY}$ qui tombent dans la couche de matériau diélectrique (13),
o la relation entre le champ électrique $E$ et ladite tension $V$,

à partir des conditions aux limites appliquées à ladite première ligne fermée (120) et à ladite deuxième ligne fermée (140) du domaine de calcul supplémentaire respectif $D_{EJ}$, dans lequel lesdites conditions aux limites dépendent de ladite valeur de tension $V$ et d'une distribution de densité de charge électrique prédéterminée $p_0$.

2.  Méthode selon la revendication 1, dans lequel ledit procédé comprend les étapes suivantes qui sont exécutées périodiquement à des intervalles de temps prédéterminés $\Delta t$ pour chaque zone $S_j$:

F) calculer une distribution de conductivité électrique $\sigma e_{JX},\sigma e_{JY}...\sigma e_{JL}$ pour chaque élément fini $e_{JX},e_{JY}...e_{JL}$ de chaque domaine de calcul supplémentaire $DE_J$, à partir de ladite distribution de température calculée $Te_{J1},Te_{J2}...Te_{JM}$ et de ladite distribution de champ électrique calculée $Ee_{JX},Ee_{JY}...E_{JL}$;
G) calcul d'une distribution de densité de courant électrique $Je_{JX}, Je_{JY}...J_{JL}$ pour chaque élément fini $e_{JX},e_{JY}...e_{JL}$ de chaque domaine de calcul supplémentaire $DE_J$ par le biais de la loi d'Ohm;
H) calculer une valeur respective de la densité de charge électrique $pe_{JX},pe_{JY}...pe_{JL}$ pour chaque élément fini $e_{JX},e_{JY}...e_{JL}$ de chaque autre domaine de calcul $DE_J$ en résolvant:

◦ la loi de continuité du courant électrique en régime transitoire, appliquée à chaque élément fini $e_{JY}$ de chaque domaine de calcul supplémentaire $D_{EJ}$ qui se trouve dans la couche de matériau diélectrique (13), et
◦ Loi de Gauss pour un champ électrique E en conditions stationnaires, appliquée à chaque élément fini $e_{JX}$, $e_{JL}$ de chaque autre domaine de calcul $DE_J$ qui se trouve dans la première couche de matériau semi-conducteur (12) ou dans la deuxième couche de matériau semi-conducteur (14);

I) mise à jour de ladite distribution de température prédéterminée $T_0$ avec les valeurs de température de ladite distribution de température calculée $Te_{J1},Te_{J2}...Te_{JM}$ et mise à jour de ladite distribution de densité de charge électrique prédéterminée $p_0$ avec les valeurs de densité de charge électrique calculées $pe_{JX},pe_{JY}...pe_{JL}$;
J) répéter les étapes de C à E.

3.  Méthode selon l'une quelconque des revendications précédentes, dans lequel ledit procédé comprend les étapes suivantes:

K) identifiant une valeur maximale respective du champ électrique $E_{MAXJ}$ dans chaque domaine de calcul supplémentaire $DE_J$;
L) comparer chaque valeur maximale du champ électrique $E_{MAXJ}$ à une valeur prédéterminée du champ électrique $E_{REF}$;
M) si ladite valeur maximale du champ électrique $E_{MAXJ}$ est supérieure à ladite valeur prédéterminée du champ électrique $E_{REF}$, établissant qu'au moins une section du câble électrique (1) à chaque zone $S_j$ est soumise à une contrainte électrique supérieure à une contrainte électrique pour laquelle ledit câble électrique (1) a été conçu ou à une contrainte électrique prédéterminée.

4.  Méthode selon l'une des revendications précédentes, dans lequel la méthode des éléments finis à l'étape D résout un système respectif d'équations linéaires pour chaque domaine de calcul $DT_J$:

$$A1_j * T_{j=}B1_j$$

où

$A1_j$ est une première matrice carrée avec un nombre de lignes et un nombre de colonnes égal au nombre d'éléments finis $e_{J1},e_{J2}...e_{JM}$ dudit domaine de calcul $DT_J$, et chaque élément de ladite matrice est un coefficient numérique constant dépendant des propriétés géométriques dudit domaine de calcul $DT_J$ et des propriétés thermophysiques d'au moins un matériau associé à un élément fini correspondant à une portion dudit câble électrique (1),
$T_j$ est un premier vecteur colonne dont le nombre d'éléments est égal au nombre d'éléments finis $e_{J1},e_{J2}...e_{JM}$

dudit domaine de calcul $DT_J$ et chaque élément dudit premier vecteur colonne est une valeur de température inconnue,

$B1_j$ est un autre premier vecteur colonne dont le nombre d'éléments est égal au nombre d'éléments finis $e_{J1}, e_{J2}...e_{JM}$ dudit domaine de calcul $DT_J$ et chaque élément est une valeur numérique variable dans le temps et dépendant des conditions limites d'échange de chaleur entre le câble électrique (1) et l'environnement extérieur, de la température de ladite distribution de température prédéterminée $T_0$ associée à chaque élément fini $e_{J1}, e_{J2}...e_{JM}$ dudit domaine de calcul $DT_J$, sur une valeur de puissance thermique calculée sur la base des valeurs mesurées du courant électrique *I* circulant dans le conducteur (11) et des propriétés thermophysiques d'au moins un matériau associé à un élément fini correspondant à ladite portion dudit câble électrique (1), dans laquelle

ladite étape D comprend les sous-étapes suivantes:

D1) calcul d'une valeur numérique respective associée à chaque élément de chaque premier vecteur $B1_j$ sur la base d'une valeur de température $Te_{J1}, Te_{J2}...Te_{JM}$ associée à chaque élément fini $e_{J1}, e_{J2}...e_{JM}$ dudit domaine de calcul $DT_J$ et avec les valeurs de puissance thermique dues au passage du courant électrique *I* dans le conducteur (11) et aux pertes dans la couche de matériau diélectrique (13);

D2) multiplier ledit premier vecteur $B1_j$ par une autre première matrice $A1_j'$, qui est la matrice inverse de ladite première matrice $A1$, pour obtenir une valeur respective de la température $Te_{J1}, Te_{J2}...Te_{JM}$ associée à chaque élément fini $e_{J1}, e_{J2}...e_{JM}$ dudit domaine de calcul $DT_J$;

D3) pour chaque domaine de calcul $DT_J$, calcul d'une différence entre une valeur respective de la température $TE_J$ mesurée dans chaque zone $S_j$ et une valeur respective de la température entre les valeurs calculées de la température $Te_{J1}, Te_{J2}...Te_{JM}$, cette valeur de la température étant associée à un élément fini respectif entre les éléments finis $e_{J1}, e_{J2}...e_{JM}$ dudit domaine de calcul $DT_J$ dans lequel cette valeur de la température a été mesurée, afin d'obtenir une valeur respective de la variation de la température $\Delta T_J$:

D4) pour chaque élément fini $e_{J1}, e_{J2}...e_{JM}$ dudit domaine de calcul $DT_J$ calculer une valeur actualisée respective de la température $Te_{J1}, Te_{J2}...Te_{JM}$ en ajoutant une valeur respective de la température obtenue à la sous-étape D2 et une valeur respective de la variation de la température $\Delta T_J$ obtenue à la sous-étape D3.

5. Procédé selon l'une quelconque des revendications précédentes, dans lequel ladite étape D comprend les sous-étapes suivantes:

D5) calculer un gradient de température de ladite distribution de température $Te_{J1}, Te_{J2}...Te_{JM}$ à l'intérieur d'une section respective dudit câble électrique (1) dans chaque zone $S_j$ le long d'une pluralité de directions radiales, où chaque valeur de gradient de température est associée à un élément fini respectif $e_{J1}, e_{J2}...e_{JM}$ d'un domaine de calcul respectif $DT_J$, où ledit élément fini est disposé à l'intérieur dudit câble électrique (1); et

D6) identification d'une direction radiale de ladite pluralité de directions radiales associée à une valeur maximale dudit gradient de température calculé, et

dans lequel

ladite distribution de champ électrique $Ee_{JX}, Ee_{JY}...E_{JL}$ à ladite étape E est calculée uniquement le long de ladite direction radiale identifiée à la sous-étape D6, en supposant que les valeurs respectives du champ électrique varient uniquement le long de ladite direction radiale dudit câble électrique (1).

6. Méthode selon les revendications 2 et 5, dans lequel la distribution de conductivité électrique $\sigma e_{JX}, \sigma e_{JY}...\sigma e_{JL}$ à l'étape F, la distribution de densité de courant électrique $Je_{JX}, Je_{JY}...J_{JL}$ à l'étape G et chaque valeur de densité de charge électrique $pe_{JX}, pe_{JY}...pe_{JL}$ à l'étape H sont calculées le long de ladite direction radiale dudit câble électrique (1) identifiée à la sous-étape D6.

7. Méthode selon la revendication précédente, dans lequel ledit procédé comprend en outre les étapes suivantes pour prendre en compte une conduction thermique le long de l'axe longitudinal (A) du conducteur (11):

N1) calculer pour chaque zone $S_j$ la valeur moyenne de la température $\overline{T_{cj}}$ dans le conducteur (11);

N2) calcul:

un premier gradient axial de température $GR1_J$ comme différence entre la valeur moyenne de la température $\overline{T_{cj}}$ dans le conducteur (11) au niveau d'une zone $S_j$ et la valeur moyenne de la température $\overline{T_{cj-1}}$ dans le conducteur (11) au niveau d'une zone précédente $S_{j-1}$, divisée par une valeur égale à une première distance $d_1$ entre ladite zone $S_j$ et ladite zone précédente $S_{j-1}$, et

un deuxième gradient de température axial $GR2_J$ comme étant la différence entre la valeur moyenne de la

température $\overline{T_{cj+1}}$ dans le conducteur (11) au niveau d'une zone $S_{j+1}$ et la valeur moyenne de la température $\overline{T_{cj}}$ dans le conducteur (11) au niveau d'une zone précédente $S_j$, en divisant par une valeur égale à une deuxième distance $d_2$ entre ladite zone $S_{j+1}$ et ladite zone précédente $S_j$;

N3) multiplier le résultat dû à la différence entre ledit premier gradient de température axial $GR1_J$ et ledit second gradient de température axial $GR2_J$ pour une valeur moyenne de conductivité thermique du conducteur (11) afin d'obtenir une valeur respective de flux de puissance thermique $Q_j$ pour chaque zone $S_j$;

N4) pour chaque zone $S_j$, calculer, selon une méthode de discrétisation des équations différentielles, chaque élément dudit premier vecteur $B1_j$ en tenant compte de la valeur du flux de puissance thermique $Q_j$.

8. Méthode selon la revendication précédente, dans lequel la première distance $d_1$ est égale à la deuxième distance $d_2$.

9. Méthode selon l'une des revendications précédentes, dans lequel ladite méthode numérique d'éléments finis à l'étape E résout un système d'équation linéaire respectif pour chaque domaine de calcul supplémentaire $DE_J$:

$$A2_j * E_{j=}B2_j$$

où

A2_j est une seconde matrice carrée avec un nombre de lignes et un nombre de colonnes égal à un nombre d'éléments finis dudit autre domaine de calcul $DE_J$ et chaque élément de ladite matrice est un coefficient numérique constant et dépend des propriétés géométriques dudit autre domaine de calcul $DE_J$ et des propriétés diélectriques d'au moins un matériau associé à ladite portion dudit câble électrique (1) qui se trouve à l'intérieur dudit autre domaine de calcul $DE_J$,

$E_j$ est un deuxième vecteur colonne dont le nombre d'éléments est égal au nombre d'éléments finis $e_{JX},e_{JY}...e_{JL}$ dudit autre domaine de calcul $DE_J$ et chaque élément est une valeur numérique du champ électrique $Ee_{JX},Ee_{JY}...E_{JL}$ associé à chaque élément fini $e_{JX},e_{JY}...e_{JL}$ dudit autre domaine de calcul $DE_J$,

$B2_j$ est un deuxième vecteur colonne supplémentaire dont le nombre d'éléments est égal au nombre d'éléments finis $e_{JX},e_{JY}...e_{JL}$ dudit domaine de calcul supplémentaire $DE_J$, chaque élément étant une valeur numérique dépendant des conditions limites du champ électrique $E$, de ladite valeur de tension $V$ et de ladite distribution prédéterminée de la densité de charge électrique $p_0$ associée à chaque élément fini $e_{JX},e_{JY}...e_{JL}$ dudit domaine de calcul supplémentaire $DE_J$.

10. Méthode selon les revendications 2 et 3 ou selon les revendications 2 et 3 et l'une quelconque des revendications 4-9, dans lequel ledit procédé comprend en outre les étapes suivantes pour obtenir une valeur de temps d'attente $t_{RP}$ qui est le temps à attendre avant que la polarité de ladite tension $V$ entre ledit conducteur (11) et ledit blindage (15) soit inversée après que la valeur de ladite tension V a été fixée à zéro, sans que ladite valeur maximale du champ électrique $E_{MAXJ}$ soit supérieure à ladite valeur prédéterminée du champ électrique $E_{REF}$:

O1) associer une valeur égale à zéro au temps d'attente $t_{RP}$;

O2) répéter les étapes de C à M ou de C à N4 pour un nombre prédéterminé d'itérations NI en considérant un intervalle de temps supplémentaire prédéterminé $\Delta t_{RP}$, dans lequel ladite valeur de la tension V et ladite valeur du courant électrique $I$ ont été fixées à zéro;

O3) à chaque itération, ajouter la valeur dudit intervalle de temps supplémentaire prédéterminé $\Delta t_{RP}$ à une valeur respective du temps d'attente $t_{RP}$ pour obtenir une valeur actualisée respective du temps d'attente $t_{RP}$;

O4) répéter les étapes de C à M ou de C à N4 pour un nombre supplémentaire prédéterminé d'itérations MI en considérant ledit intervalle de temps supplémentaire prédéterminé $\Delta t_{RP}$, dans lequel ladite valeur de tension $V$ est en valeur absolue égale à une valeur de tension nominale et a un signe opposé au signe de ladite valeur de tension $V$ avant l'inversion de la polarité de ladite tension $V$, et ladite valeur de courant électrique $I$ est égale à zéro;

O5) identifier pour chaque zone $S_j$ la valeur maximale du champ électrique $E_{MAXJ}$ et identifier pour chaque itération dudit nombre supplémentaire prédéterminé d'itérations MI une valeur maximale respective du champ électrique $E_{MAXRP}$ entre lesdites valeurs maximales du champ électrique, dans laquelle ladite valeur maximale du champ électrique $E_{MAXRP}$ est la valeur maximale du champ électrique atteinte après une inversion de la polarité de la tension $V$ entre ledit conducteur (11) et ledit blindage (15) avec un temps d'attente égal au temps d'attente $t_{RP}$;

O6) répéter les étapes de O1 à O5 en augmentant progressivement ledit nombre prédéterminé d'itérations NI jusqu'à ce que la valeur maximale du champ électrique $E_{MAXRP}$ soit inférieure ou égale à ladite valeur prédéterminée du champ électrique $E_{REF}$ et mémoriser la valeur du temps d'attente $t_{RP}$ correspondant à ladite valeur maximale du champ électrique $E_{MAXRP}$.

**11.** Méthode selon l'une des revendications 1-10, dans lequel la zone $S_j$ se trouve à l'extérieur du câble électrique (1).

**12.** Méthode selon l'une des revendications 1-10, dans lequel la zone $S_j$ se trouve à l'intérieur du câble électrique (1).

**13.** Méthode selon l'une quelconque des revendications 1-12, dans lequel ledit câble électrique (1) comprend une couche externe (16), et dans lequel

lesdits moyens de mesure de la température ($TS_J$) comprennent une pluralité de capteurs de température ($TS_{1J}$) pour mesurer une température dans une zone respective $S_j$ et lesdits capteurs de température sont disposés à l'intérieur dudit câble électrique (1) ou d'une partie respective de ladite couche externe (16) ou à une distance prédéterminée de ladite couche externe (16).

**14.** Méthode selon l'une des revendications 1-12, dans lequel

ledit câble électrique (1) comprend une couche externe (16), et
dans lequel
lesdits moyens de mesure de la température comprennent un capteur réparti de la température avec une résolution longitudinale pour mesurer une température à chaque zone $S_j$ et ledit capteur réparti de la température est disposé à l'intérieur dudit câble électrique (1) ou sur ladite couche externe (16) ou à une distance prédéterminée de ladite couche externe (16).

**15.** Système de calcul d'un champ électrique à l'intérieur d'une couche de matériau diélectrique (13) d'un câble électrique haute tension (1) pour courant électrique continu, dans lequel ledit câble électrique (1) est du type comprenant de l'intérieur vers l'extérieur un conducteur (11) ayant un axe longitudinal (A), une première couche de matériau semi-conducteur (12), ladite couche de matériau diélectrique (13), une seconde couche de matériau semi-conducteur (14), une couche de matériau métallique (15) appelée blindage, ledit système comprenant:

- des moyens de mesure de la température ($TS_J$) pour mesurer une valeur de température dans une ou plusieurs zones $S_j$, avec j=1,2...N où N est un nombre entier positif, chacune d'entre elles étant disposée le long dudit câble électrique (1) sur un plan respectif $P_j$ transversal à l'axe longitudinal (A) dudit câble électrique (1) et ayant une forme géométrique définie à partir d'une ligne de référence fermée;
- une unité de traitement connectée auxdits moyens de mesure de la température ($TS_J$) et configurée pour exécuter les étapes du procédé selon l'une quelconque des revendications précédentes.

**16.** Système selon la revendication précédente, dans lequel ledit système comprend:

- un dispositif de mesure de tension (18) pour mesurer une valeur de tension $V$ entre ledit conducteur (11) et ledit blindage (15);
- un dispositif de mesure de courant électrique (19) pour mesurer une valeur de courant électrique I circulant le long de l'axe longitudinal (A) du conducteur (11);

dans lequel
ladite unité de traitement est connectée audit dispositif de mesure de la tension (18) et audit dispositif de mesure du courant électrique (19) et configurée pour acquérir une valeur de tension V par ledit dispositif de mesure de la tension (18) et une valeur de courant électrique $I$ par ledit dispositif de mesure du courant électrique (19).

**17.** Système selon la revendication 15, dans lequel ledit système comprend des moyens de stockage et ledit traitement est connecté auxdits moyens de stockage et est configuré pour stocker une valeur prédéterminée de tension et/ou une valeur prédéterminée de courant électrique et pour acquérir ladite valeur prédéterminée de tension et/ou ladite valeur prédéterminée de courant électrique à partir desdits moyens de stockage.

**18.** Système selon la revendication 15 ou 16, dans lequel ledit système comprend des moyens de stockage et ladite unité de traitement est connectée auxdits moyens de stockage et configurée pour stocker ladite distribution de température prédéterminée $T_0$ et ladite distribution de densité de charge électrique prédéterminée $\rho_0$.

Fig. 1

Fig. 2A          Fig. 2B          Fig. 2C

Fig. 3A          Fig. 3B          Fig. 3C

Fig. 4

Fig. 5

Fig. 6

**EP 4 396 593 B1**

**Patent documents cited in the description**

- CN 110427637 A